# EUROPEAN PATENT APPLICATION

(11) **EP 4 390 453 A1**
(43) Date of publication of application: **26.06.2024**
(21) Application number: 21957024.9
(22) Date of filing: 14.09.2021
(51) Int. Cl.: G01S 13/06

(54) **SIGNAL PROCESSING METHOD AND RELATED APPARATUS**

(71) Applicant: Huawei Technologies Co., Ltd., Shenzhen, Guangdong 518129 (CN)
(72) Inventor: GONG, Jiaxue, Shenzhen, Guangdong 518129 (CN); SHI, Xianling, Shenzhen, Guangdong 518129 (CN); HUANG, Zhizhen, Shenzhen, Guangdong 518129 (CN); CAO, Guoliang, Shenzhen, Guangdong 518129 (CN); CHEN, Shanjie, Shenzhen, Guangdong 518129 (CN)
(74) Representative: Pfenning, Meinig & Partner mbB
(86) International application number: PCT/CN2021/118362
(87) International publication number: WO 2023/039733

(57) **Abstract**

Embodiments of this application provide a signal processing method and a related apparatus, and may be applied to the fields such as intelligent driving, intelligent transportation, surveying and mapping, and intelligent manufacturing. The method includes: obtaining a first detection signal corresponding to a first detection region, where the first detection signal includes a noise signal of the first detection region; and outputting indication information based on the first detection signal, where the indication information indicates that interference exists in the first detection region. According to the method in embodiments of this application, a proactive alarm function is implemented. The indication information indicates interference, so that an alarm can be reported in time when interference occurs, to improve security. In addition, the indication information improves information richness and accuracy, and a receive side can conveniently obtain an interference indication. This improves user experience.

## Description

### TECHNICAL FIELD

This application relates to signal processing and detection technologies, and is applied to the fields such as intelligent driving, intelligent transportation, surveying and mapping, and intelligent manufacturing, and in particular, to a signal processing method and a related apparatus.

### BACKGROUND

With development of information technologies and computer vision, detection technologies have developed rapidly, and various detection apparatuses bring great convenience to people's life and travel. The detection apparatus is an "eye" of an electronic device (for example, a vehicle, a robot, or an uncrewed aerial vehicle) that senses an environment. A radar (lidar) has high distance measurement precision, and a detection result of the radar usually has a high weight during use.

For example, an advanced driver assistance system (Advanced Driver Assistance System, ADAS) plays an important role in intelligent vehicles. The advanced driver assistance system uses a plurality of detection apparatuses (including a visual sensor like a camera and a camera lens, and a radar sensor) installed on a vehicle, to detect a surrounding environment, perform detection, identification, and the like on an object, and perform systematic calculation and analysis on a driving environment based on data such as a map to plan a driving route and a driving operation and detect potential risks in advance. This effectively improves comfort and safety of vehicle driving. The ADAS system generally includes a plurality of types of sensors. Because a radar and a lidar can quickly and precisely obtain surrounding environment information, an ADAS system equipped with the radar and the lidar usually gives a high weight to the radar and the lidar during multi-sensor fusion.

In this case, if reliability of a detection result of the radar or the lidar is reduced, a decision error may occur on a device that uses the detection result. Especially for a vehicle using a radar or a lidar, if reliability of a detection result is reduced, the vehicle may perform emergency braking due to a "false alarm signal" in the detection result, or the vehicle may not evade or brake in time due to missing detection of a signal. Consequently, driving comfort and safety of the vehicle are reduced, and even life safety of a passenger is threatened in a serious case. How to resolve the foregoing problem is a research focus of a person skilled in the art.

### SUMMARY

Embodiments of this application provide a signal processing method and a related apparatus, so that an alarm can be reported in time when interference occurs, to improve security.

According to a first aspect, an embodiment of this application provides a signal processing method. The method includes:
obtaining a first detection signal corresponding to a first detection region, where the first detection signal includes a noise signal of the first detection region; and
outputting indication information based on the first detection signal, where
the indication information indicates that interference exists in the first detection region.

Optionally, the interference may be one or more of background light interference, millimeter wave interference, sound wave interference, and the like.

According to the method in this embodiment of this application, an alarm can be reported in time when interference exists in a detection region, to improve security. A receive side may conveniently obtain an indication of the interference. This improves user experience and reduces calculation consumption of the receive side. Further, the indication information may be output together with a detection result, to improve information richness and accuracy.

A detection apparatus (or a device on which the detection apparatus is installed, a device that uses the detection result, or the like) may perform reliability evaluation on the detection result of the detection region based on the indication information, and adjust confidence of the detection result in time, to avoid a security problem.

In a possible implementation of the first aspect, the first detection signal may be from the detection apparatus, for example, a laser detection apparatus (for example, a lidar), a millimeter-wave radar, an ultrasonic radar, or an image sensor.

For example, the first detection signal is from a light detection apparatus (for example, a lidar), and the indication information may specifically indicate that background light interference exists in the first detection region.

In another possible implementation of the first aspect, the first detection signal may be from a detector in the laser detection apparatus.

Further, optionally, the detector may be an array detector including a plurality of detection elements, for example, a SPAD array or a SiPM array. The SPAD array and the SiPM array are sensitive to an optical signal, and are easily saturated. Therefore, the SPAD array and the SiPM array are easily interfered with by background light, resulting in an inaccurate detection result. However, based on the indication information, an alarm may be reported when background light interference exists, to improve security of a result obtained by using the laser detection apparatus, and improve use experience of the laser detection apparatus.

In another possible implementation of the first aspect, the first detection signal is a noise signal corresponding to background light. In this implementation, the detection apparatus performs passive detection (where a transmission signal is not actively generated), light received by the detection apparatus is the background light, and the first detection signal is the noise signal.

In another possible implementation of the first aspect, the noise signal is a noise signal corresponding to background light, and the first detection signal further includes an echo signal corresponding to a laser transmission signal. The method further includes: outputting a first detection result based on the first detection signal, where the first detection result indicates that one or more targets exist in the first detection region.

In this implementation, light received by the detection apparatus includes both a return signal of the laser transmission signal and the background light. Therefore, the first detection signal correspondingly includes the echo signal and the noise signal. The echo signal is obtained based on the return signal of the laser transmission signal. Therefore, it may indicate that a target exists in the detection region, and the target reflects the laser transmission signal.

Optionally, the first detection result may be one or more of a digital signal, distance information, a target point, a point cloud, or the like.

Further, optionally, there may be a plurality of designs for outputting the first detection result. For example, the first detection result may be output in a fixed data format and/or at a fixed output frequency. For another example, the first detection result is output in response to a request of a receive end.

In another possible implementation of the first aspect, the indication information includes alarm information, and the alarm information indicates a background light interference degree.

Optionally, the background light interference degree may be related to a background light interference range (a horizontal interference degree), or may be related to a background light interference intensity (a vertical interference degree), or may be related to interference duration, or may be comprehensively related to one or more of the foregoing related factors.

An interference degree may be indicated based on the alarm information, so that the indication information is used more abundantly, a use requirement of a user is met, and user experience is improved.

For example, an autonomous driving system or an assisted driving system may determine an autonomous driving level based on different background interference degrees, so that driving comfort can be improved as much as possible while passenger safety is ensured.

In another possible implementation of the first aspect, the background light interference degree corresponds to detection performance, and a predefined or preconfigured correspondence exists between the background light interference degree and the detection performance.

The detection performance is used to evaluate a capability of the detection apparatus to detect a target under a specific detection condition.

In another possible implementation of the first aspect, the detection performance is related to one or more of the following parameters:
background light information, a quantity of interfered pixels or a quantity of interfered pixel regions, a distance between an object target and the detection apparatus, a reflectivity of a target object, a volume of the target object, or a position of the target object in a field of view of the detection apparatus.

The detection performance is quantized based on the foregoing parameters, so that a background light interference degree of the detection apparatus can be accurately located, to output more precise indication information.

In another possible implementation of the first aspect, the alarm information is related to at least one of the following two indicators:
an indicator 1: a distance at which a target with a preset reflectivity can be detected; and
an indicator 2: a reflectivity of a target that can be detected at a preset distance.

The detection performance is quantized in the foregoing manner, so that some parameters may be set to a preset value, to reduce a change factor, and more quickly locate the background light interference degree of the detection apparatus, so as to output accurate and timely indication information.

In another possible implementation of the first aspect, the alarm information corresponds to at least one (namely, one or more) pixel region of the detector, and each pixel region includes one or more pixels.

In the foregoing manner, an alarm granularity may be precise to a pixel, or a pixel region including a plurality of pixels. In the foregoing implementation, a detailed alarm condition may be provided with high accuracy.

In another possible implementation of the first aspect, a detection sub-region corresponding to the at least one pixel region does not include a traffic-irrelevant object, and the traffic-irrelevant object includes the sky.

In this way, accuracy and effectiveness of the indication information may be improved, a data amount of the indication information may be reduced, and user experience may be improved.

In a design, if a pixel region includes both a traffic-related object and a traffic-irrelevant object, if alarm information indicates a corresponding alarm for the pixel region, the alarm information should not be canceled.

Optionally, the traffic-irrelevant object may include the sky and the like. The traffic-related object may include one or more of the following objects: a vehicle, a rail, a building, an obstacle, a lane line, a vulnerable traffic participant (a bicycle, a pedestrian, or the like), a lane line, a road sign, a red street lamp, or the like.

In another possible implementation of the first aspect, the first detection signal includes an echo signal corresponding to a transmission signal.

The at least one pixel region does not include a target point, or a quantity of target points in the at least one pixel region is less than a preset value.

The target point is obtained based on the echo signal corresponding to the transmission signal.

In the foregoing manner, the target point may be used to verify the indication information. For example, if background light interference exists in a region but does not affect detection of a target point, an alarm may not be reported for the region. This reduces a possibility of false alarms and improves alarm rationality and accuracy.

In another possible implementation of the first aspect, the alarm information includes a range in which the background light interference exists.

Further, optionally, the range in which the background light interference exists includes at least one of a pixel region in which the background light interference exists, a detection sub-region in which the background light interference exists, or a distance range in which the background light interference exists.

The detection sub-region in which the background light interference exists is included in the first detection region.

In the foregoing manner, a region (or regions) or a distance range (or distance ranges) that is (are) interfered with may be specifically indicated, and an interference level may be specifically indicated, so that alarm accuracy can be improved.

In another possible implementation of the first aspect, the indication information includes information about the noise signal.

The information about the noise signal includes one or more of an average value of the noise signal, a variance of the noise signal, a level of the noise signal, a waveform of the noise signal, or the like.

In another possible implementation of the first aspect, before the outputting indication information, the method further includes:
verifying, based on an image and/or point cloud data of the first detection region, content indicated by the indication information.

False alarm information is usually mixed in the output indication information, and a processing apparatus may verify the indication information, to improve accuracy of the indication information.

In another possible implementation of the first aspect, the outputting indication information includes:
outputting the indication information to a first device. The first device may be a detection apparatus, or the first device is a terminal device in which a detection apparatus is located, or a device that uses a detection result of the first detection region. For example, the first device may be a lidar, a detection system, a vehicle, a server, a roadside device, or the like. Further, the processing apparatus may output the indication information to the first device in an output manner that is predefined, preset, or specified in a protocol. The output manner includes a data format, an output periodicity, or the like. This output manner features simple transmission logic and a stable data amount.

In another possible implementation of the first aspect, the outputting indication information includes:
outputting the indication information to a user. Specifically, the indication information may trigger an alarm of a voice, light, or a display, to remind the user that the background light interference exists. In an assisted driving scenario, such background light interference may affect detection performance of a sensor like a lidar, and may further remind a user that an assisted driving system is unreliable or the assisted driving system needs to be exited, and a driver takes over driving. In an autonomous driving scenario, such background light interference may cause an autonomous driving system failure or to be exited, or the autonomous driving system does not strongly depend on an interfered sensor to operate.

For example, the processing apparatus may include an output control module like a display processor, an audio processor, or a vibration processor (or the processing apparatus is connected to the output control module), and the processing apparatus may output the indication information to the user by using the foregoing module. The display processor is used as an example. The indication information may trigger the display processor to present a reminder message, warning information, or the like, to remind the user that the background light interference exists in the detection region.

For another example, the processing apparatus may be included in a vehicle or connected to the vehicle, and the processing apparatus may trigger an alarm of a voice, light, a vibration prompt, a display, or the like by using a controller at a vehicle end. In a design, the foregoing alarm may be presented by using a controller in a cockpit domain of the vehicle, and a user in the cockpit may feel an alarm prompt.

In another possible implementation of the first aspect, the method includes:
receiving request information from the first device, where the request information is used to request the background light information; and
outputting the indication information to the first device.

The processing apparatus may provide indication information required by a requester. The provided indication information is valuable and targeted, and a data transmission amount is small. This reduces a quantity of redundant information and reduces consumption of processing resources of the requester.

According to a second aspect, an embodiment of this application provides a signal processing method. The method includes:
obtaining a first detection signal corresponding to a first detection region, where the first detection signal includes an echo signal corresponding to a laser transmission signal;
obtaining a second detection signal corresponding to a second detection region, where the second detection region overlaps the first detection region; and
outputting indication information based on the first detection signal and the second detection signal, where
the indication information indicates that interference exists in the first detection region.

Optionally, the interference may be one or more of background light interference, millimeter wave interference, sound wave interference, and the like.

In this embodiment of this application, the first detection region and the second detection region have an overlapping part. The indication information may be obtained based on the second detection signal corresponding to the second detection region and the first detection signal corresponding to the first detection region. The indication information indicates that the interference exists in the first detection region.

The indication information may be output together with a detection result, to improve information richness and accuracy, and reduce a calculation amount on a receive side of the indication information, so as to improve user experience. In addition, an alarm can be reported actively through the indication information, and the alarm is of high timeliness.

A detection apparatus (or a device that uses the detection result) may perform reliability evaluation on the detection result of the first detection region based on the indication information, and adjust confidence of the detection result, to avoid a security problem.

In a possible implementation of the second aspect, the second detection signal may be from an image detection apparatus, for example, a laser detection apparatus, an image sensor, or a thermal imaging sensor.

The first detection signal is from a distance measurement apparatus, for example, a laser detection apparatus (for example, a lidar), a millimeter-wave radar, an ultrasonic radar, or an image sensor.

For example, the first detection signal is from a light detection apparatus (for example, a lidar), and the indication information may specifically indicate that background light interference exists in the first detection region.

In another possible implementation of the second aspect, the second detection signal corresponding to the second detection region includes image information corresponding to the second detection region.

The image information of the second detection region may be an image of the second detection region, or may include intensity information, grayscale information, or the like of a plurality of pixels.

Alternatively, optionally, the second detection signal indicates an intensity or a level of background light based on an image signal.

In another possible implementation of the second aspect, the method further includes: outputting a first detection result based on the first detection signal, where the first detection result indicates that one or more targets exist in the first detection region.

In another possible implementation of the second aspect, the indication information includes alarm information, and the alarm information indicates a background light interference degree.

An interference degree may be indicated based on the alarm information, so that the indication information is used more abundantly, a use requirement of a user is met, and user experience is improved.

For example, an autonomous driving system or an assisted driving system may determine an autonomous driving level based on background light interference of different degrees, so that driving comfort can be improved as much as possible while passenger safety is ensured.

In another possible implementation of the second aspect, the background light interference degree corresponds to detection performance, and a predefined or preconfigured correspondence exists between the background light interference degree and the detection performance.

In another possible implementation of the second aspect, the detection performance is related to one or more of the following parameters:
background light information, a quantity of interfered pixels or a quantity of interfered pixel regions, a reflectivity of a target, a volume of the target, or a position of the target in a field of view of the detection apparatus.

The detection performance is quantized based on the foregoing parameters, so that a background light interference degree of the detection apparatus can be accurately located, to output more precise indication information.

In another possible implementation of the second aspect, the alarm information is related to at least one of the following two indicators:
an indicator 1: a distance at which a target with a preset reflectivity can be detected; and
an indicator 2: a reflectivity of a target that can be detected at a preset distance.

The detection performance is quantized in the foregoing manner, so that some parameters may be set to a preset value, to reduce a change factor, and more quickly locate the background light interference degree of the detection apparatus, so as to output accurate and timely indication information.

In another possible implementation of the second aspect, the alarm information corresponds to at least one pixel region, and each pixel region includes one or more pixels.

In the foregoing manner, an alarm granularity may be precise to a pixel, or a pixel region including a plurality of pixels. In the foregoing implementation, a detailed alarm condition may be provided with high accuracy.

In another possible implementation of the second aspect, a detection sub-region corresponding to the at least one pixel region does not include a traffic-irrelevant object, and the traffic-irrelevant object includes the sky.

In another possible implementation of the second aspect, the at least one pixel region does not include a target point, and the target point is obtained based on the echo signal corresponding to the laser transmission signal.

In another possible implementation of the second aspect, a quantity of target points in the at least one pixel region is less than a preset value.

The target point is obtained based on the echo signal corresponding to the laser transmission signal.

In the foregoing manner, the target point may be used to verify the indication information. For example, if background light interference exists in a region but does not affect detection of a target point, an alarm may not be reported for the region. This reduces a possibility of false alarms and improves alarm rationality and accuracy.

In another possible implementation of the second aspect, the alarm information further indicates a range in which the background light interference exists.

The range in which the background light interference exists includes at least one of a pixel region in which the background light interference exists, a detection sub-region in which the background light interference exists, a distance range in which the background light interference exists, or the like, and the detection sub-region in which the background light interference exists is included in the first detection region.

In the foregoing manner, a region (or regions) or a distance range (or distance ranges) that is (are) interfered with may be specifically indicated, and an interference level may be specifically indicated, so that alarm accuracy can be improved.

In another possible implementation of the second aspect, the indication information includes one or more of an intensity average value, an intensity variance, and the like of the background light.

In another possible implementation of the second aspect, the outputting alarm information includes:
outputting the indication information to a first device. The first device may be a detection apparatus, or the first device is a terminal device in which a detection apparatus is located, or a device that uses a detection result of the first detection region. For example, the first device may be a lidar, a detection system, a vehicle, a server, a roadside device, or the like.

Further, the processing apparatus may output the indication information to the first device in an output manner that is predefined, preset, or specified in a protocol. The output manner includes a data format, an output periodicity, or the like. This output manner features simple transmission logic and a stable data amount.

In another possible implementation of the second aspect, the method includes:
receiving request information from the first device, where the request information is used to request the background light information; and
outputting the indication information to the first device.

The processing apparatus may provide indication information required by a requester. The provided indication information is valuable and targeted, and a data transmission amount is small. This reduces a quantity of redundant information and reduces consumption of processing resources of the requester.

According to a third aspect, an embodiment of this application provides a signal processing apparatus. The signal processing apparatus includes an obtaining unit and a processing unit, and the signal processing apparatus is configured to implement the method described in the first aspect or any one of the possible implementations of the first aspect.

In a possible implementation of the third aspect, the signal processing apparatus includes:
an obtaining unit, configured to obtain a first detection signal corresponding to a first detection region, where the first detection signal includes a noise signal of the first detection region; and
a processing unit, configured to output indication information based on the first detection signal, where
the indication information indicates that interference exists in the first detection region.

Optionally, the interference may be one or more of background light interference, millimeter wave interference, sound wave interference, and the like.

In a possible implementation of the third aspect, the first detection signal may be from a detection apparatus, for example, a laser detection apparatus (for example, a lidar), a millimeter-wave radar, an ultrasonic radar, or an image sensor.

For example, the first detection signal is from a light detection apparatus (for example, a lidar), and the indication information may specifically indicate that background light interference exists in the first detection region.

In another possible implementation of the third aspect, the first detection signal may be from a detector in the laser detection apparatus. Further, optionally, the detector may be an array detector including a plurality of detection elements. When the detector includes a plurality of detection elements, the first detection signal may be from all or some of the detection elements in the detector.

In another possible implementation of the third aspect, the first detection signal is a noise signal corresponding to background light.

In another possible implementation of the third aspect, the noise signal is a noise signal corresponding to background light, and the first detection signal further includes an echo signal corresponding to a laser transmission signal.

The processing unit is further configured to output a first detection result based on the first detection signal, where the first detection result indicates that one or more targets exists in the first detection region.

In another possible implementation of the third aspect, the indication information includes alarm information, and the alarm information indicates a background light interference degree.

In another possible implementation of the third aspect, the background light interference degree corresponds to detection performance, and a predefined or preconfigured correspondence exists between the background light interference degree and the detection performance.

In another possible implementation of the third aspect, the detection performance is related to one or more of the following parameters:
background light information, a quantity of interfered pixels or a quantity of interfered pixel regions, a distance between an object target and the detection apparatus, a reflectivity of a target object, a volume of the target object, a position of the target object in a field of view of the detection apparatus, or the like.

In another possible implementation of the third aspect, the alarm information is related to at least one of the following two indicators:
an indicator 1: a distance at which a target with a preset reflectivity can be detected; and
an indicator 2: a reflectivity of a target that can be detected at a preset distance.

In another possible implementation of the third aspect, the alarm information corresponds to at least one (namely, one or more) pixel region of the detector, and each pixel region includes one or more pixels.

In another possible implementation of the third aspect, a detection sub-region corresponding to the at least one pixel region does not include a traffic-irrelevant object, and the traffic-irrelevant object includes the sky.

In another possible implementation of the third aspect, the first detection signal includes an echo signal corresponding to the laser transmission signal.

The at least one pixel region does not include a target point, or a quantity of target points in the at least one pixel region is less than a preset value.

The target point is obtained based on the echo signal corresponding to the laser transmission signal.

In another possible implementation of the third aspect, the alarm information includes a range in which the background light interference exists.

Further, optionally, the range in which the background light interference exists includes one or more of a pixel region in which the background light interference exists, a detection sub-region in which the background light interference exists, a distance range in which the background light interference exists, or the like.

The detection sub-region in which the background light interference exists is included in the first detection region.

In another possible implementation of the third aspect, the indication information includes information about the noise signal.

The information about the noise signal includes one or more of an average value of the noise signal, a variance of the noise signal, a level of the noise signal, a waveform of the noise signal, or the like.

In another possible implementation of the third aspect, the processing unit is further configured to:
verify, based on an image and/or point cloud data of the first detection region, content indicated by the indication information.

In another possible implementation of the third aspect, the processing unit is further configured to:
output the alarm information to a first device. The first device may be a detection apparatus, or the first device is a terminal device in which a detection apparatus is located, a device that uses a detection result of the first detection region, or the like. For example, the first device may be a lidar, a detection system, a vehicle, a server, a roadside device, or the like.

In another possible implementation of the third aspect, the obtaining unit is further configured to receive request information from the first device, where the request information is used to request the background light information.

The processing unit is further configured to output the alarm information to the first device.

According to a fourth aspect, an embodiment of this application provides a signal processing apparatus. The signal processing apparatus includes an obtaining unit and a processing unit, and the signal processing apparatus is configured to implement the method described in the second aspect or any one of the possible implementations of the second aspect.

In a possible implementation of the fourth aspect, the signal processing apparatus includes:
the obtaining unit, configured to obtain a first detection signal corresponding to a first detection region, where the first detection signal includes an echo signal corresponding to a laser transmission signal, where
the obtaining unit is further configured to obtain a second detection signal corresponding to a second detection region, where the second detection region overlaps the first detection region; and
the processing unit, configured to output indication information based on the first detection signal and the second detection signal, where
the indication information indicates that interference exists in the first detection region.

Optionally, the interference may be one or more of background light interference, millimeter wave interference, sound wave interference, and the like.

In a possible implementation of the fourth aspect, the second detection signal may be from an image detection apparatus, for example, a laser detection apparatus, an image sensor, or a thermal imaging sensor.

The first detection signal is from a distance measurement apparatus, for example, a laser detection apparatus (for example, a lidar), a millimeter-wave radar, an ultrasonic radar, or an image sensor.

For example, the first detection signal is from a light detection apparatus (for example, a lidar), and the indication information may specifically indicate that background light interference exists in the first detection region.

In another possible implementation of the fourth aspect, the second detection signal corresponding to the second detection region includes image information corresponding to the second detection region.

The image information of the second detection region may be an image of the second detection region, or may include intensity information, grayscale information, or the like of a plurality of pixels.

Alternatively, optionally, the second detection signal indicates an intensity or a level of background light based on an image signal.

In another possible implementation of the fourth aspect, the processing unit is further configured to:
output a first detection result based on the first detection signal, where the first detection result indicates that one or more targets exist in the first detection region.

In another possible implementation of the fourth aspect, the indication information includes alarm information, and the alarm information indicates a background light interference degree.

In another possible implementation of the fourth aspect, the background light interference degree corresponds to detection performance, and a predefined or preconfigured correspondence exists between the background light interference degree and the detection performance.

In another possible implementation of the fourth aspect, the detection performance is related to one or more of the following parameters:
background light information, a distance between a target and a detection apparatus, a reflectivity of the target, a volume of the target, or a position of the target in a field of view of the detection apparatus.

In another possible implementation of the fourth aspect, the alarm information is related to at least one of the following two indicators:
an indicator 1: a distance at which a target with a preset reflectivity can be detected; and
an indicator 2: a reflectivity of a target that can be detected at a preset distance.

In another possible implementation of the fourth aspect, the alarm information corresponds to at least one pixel region, and each pixel region includes one or more pixels.

In another possible implementation of the fourth aspect, a detection sub-region corresponding to the at least one pixel region does not include a traffic-irrelevant object, and the traffic-irrelevant object includes the sky.

In another possible implementation of the fourth aspect, the at least one pixel region does not include a target point, or a quantity of target points in the at least one pixel region is less than a preset value.

The target point is obtained based on the echo signal corresponding to the laser transmission signal.

In another possible implementation of the fourth aspect, the alarm information further indicates a range in which the background light interference exists.

The range in which the background light interference exists includes one or more of a pixel region in which the background light interference exists, a detection sub-region in which the background light interference exists, a distance range in which the background light interference exists, or the like.

The detection sub-region in which the background light interference exists is included in the first detection region.

In another possible implementation of the fourth aspect, the indication information includes one or more of an intensity average value, an intensity variance, and the like of the background light.

In another possible implementation of the fourth aspect, the processing unit is further configured to:
output the indication information to a first device. The first device may be a detection apparatus, or the first device is a terminal device in which a detection apparatus is located, a device that uses a detection result of the first detection region, or the like. For example, the first device may be a lidar, a detection system, a vehicle, a server, a roadside device, or the like.

In another possible implementation of the fourth aspect, the obtaining unit is further configured to receive request information from the first device, where the request information is used to request the background light information.

The processing unit is further configured to output the indication information to the first device.

According to a fifth aspect, an embodiment of this application provides a signal processing apparatus. The signal processing apparatus includes a processor and a communication interface. The communication interface is configured to receive and/or send data, and/or the communication interface is configured to provide an input and/or an output for the processor. The processor is configured to implement the method described in any implementation of the first aspect, or is configured to implement the method described in any implementation of the second aspect.

It should be noted that the processor included in the signal processing apparatus described in the fifth aspect may be a processor specially configured to perform these methods (referred to as a dedicated processor for ease of differentiation), or may be a processor that executes these methods by invoking a computer program, for example, a general-purpose processor. Optionally, the at least one processor may further include both a dedicated processor and a general-purpose processor.

Optionally, the computer program may be stored in a memory. For example, the memory may be a non-transitory (non-transitory) memory, for example, a read-only memory (Read Only Memory, ROM). The memory and the processor may be integrated on a same component, or may be separately disposed on different components. A type of the memory and a manner of disposing the memory and the processor are not limited in embodiments of this application.

In a possible implementation, the at least one memory is located outside the signal processing apparatus.

In another possible implementation, the at least one memory is located inside the signal processing apparatus.

In another possible implementation, some memories of the at least one memory are located inside the signal processing apparatus, and the other memories are located outside the signal processing apparatus.

In this application, the processor and the memory may alternatively be integrated into one component. In other words, the processor and the memory may alternatively be integrated together.

According to a sixth aspect, an embodiment of this application provides a detection apparatus, where the detection apparatus includes a laser transmitter, a detector, and at least one processor. The laser transmitter is configured to generate a laser transmission signal, the detector is configured to receive a signal from a first detection region and obtain a first detection signal, and the at least one processor is configured to implement the method described in the first aspect or any one of the possible implementations of the first aspect.

Optionally, the detection apparatus may be an apparatus like a lidar, an optical distance measurement apparatus, or a fusion detection apparatus (where the fusion detection apparatus includes an optical distance measurement module, and optionally further includes another sensor, for example, an image sensor).

According to a seventh aspect, an embodiment of this application provides a detection system, where the detection system includes an image sensor, a detector, a laser transmitter, and at least one processor. The laser transmitter is configured to generate a laser transmission signal, and the detector is configured to receive an optical signal from a first detection region and obtain a first detection signal. The image sensor is configured to obtain a second detection signal corresponding to a second detection region. The at least one processor is configured to implement the method described in the second aspect or any one of the possible implementations of the second aspect.

Optionally, the detection system may be an apparatus like a lidar, an optical distance measurement apparatus, or a fusion detection apparatus.

According to an eighth aspect, an embodiment of this application provides a chip system. The chip system includes a processor and a communication interface. The communication interface is configured to receive and/or send data, and/or the communication interface is configured to provide an input and/or an output for the processor. The chip system is configured to implement the method described in any implementation of the first aspect, or is configured to implement the method described in any implementation of the second aspect.

According to a ninth aspect, an embodiment of this application provides a computer-readable storage medium. The computer-readable storage medium stores instructions, and when the instructions are run on at least one processor, the method described in any implementation of the first aspect or the second aspect is implemented.

According to a tenth aspect, this application provides a computer program product. The computer program product includes computer instructions, and when the instructions are run on at least one processor, the method described in any implementation of the first aspect or the second aspect is implemented.

Optionally, the computer program product may be a software installation package. When the foregoing method needs to be used, the computer program product may be downloaded and executed on a computing device.

According to an eleventh aspect, an embodiment of this application provides a terminal, where the terminal includes the apparatus described in any implementation of the third aspect to the seventh aspect.

Optionally, the terminal is a vehicle, an uncrewed aerial vehicle, or a robot. Alternatively, the terminal may be any possible smart home device, intelligent wearable device, intelligent manufacturing device, or the like.

For beneficial effect of the technical solutions provided in the third aspect to the eleventh aspect of this application, refer to beneficial effect of the technical solutions provided in the first aspect or the second aspect. Details are not described herein again.

### BRIEF DESCRIPTION OF DRAWINGS

The following briefly describes accompanying drawings used in describing embodiments.
FIG. 1 is a schematic diagram of a radar detection signal according to an embodiment of this application;
FIG. 2A is a schematic diagram of a background light interference scenario according to an embodiment of this application;
FIG. 2B is a schematic diagram of a detection signal according to an embodiment of this application;
FIG. 3A is a schematic diagram of a background light interference scenario according to an embodiment of this application;
FIG. 3B is a schematic diagram of a detection signal according to an embodiment of this application;
FIG. 4 is a schematic diagram of a detection result according to an embodiment of this application;
FIG. 5 is a schematic diagram of an architecture of a detection system according to an embodiment of this application;
FIG. 6 is a schematic working diagram of a laser transmitter according to an embodiment of this application;
FIG. 7 is a schematic operating diagram of another laser transmitter according to an embodiment of this application;
FIG. 8A and FIG. 8B are some other schematic operating diagrams of a laser transmitter according to an embodiment of this application;
FIG. 9 is a schematic diagram of another possible detection system according to an embodiment of this application;
FIG. 10 is a schematic diagram of a possible detection scenario according to an embodiment of this application;
FIG. 11 is a schematic flowchart of a signal processing method according to an embodiment of this application;
FIG. 12 is a schematic diagram of obtaining a detection signal according to an embodiment of this application;
FIG. 13 is another schematic diagram of obtaining a detection signal according to an embodiment of this application;
FIG. 14 is a schematic diagram of a correspondence between a detection distance reduction degree and alarm information according to an embodiment of this application;
FIG. 15 is a schematic diagram of a correspondence between a detection distance reduction degree and alarm information according to an embodiment of this application;
FIG. 16 is a schematic diagram of pixels corresponding to a detection signal according to an embodiment of this application;
FIG. 17 is a schematic diagram of obtaining indication information according to an embodiment of this application;
FIG. 18 is a schematic diagram of two types of possible indication information according to an embodiment of this application;
FIG. 19 is another schematic diagram of obtaining indication information according to an embodiment of this application;
FIG. 20 is a schematic flowchart of another signal processing method according to an embodiment of this application;
FIG. 21 is a schematic diagram of a possible detection region according to an embodiment of this application;
FIG. 22 is a schematic diagram of a structure of a signal processing apparatus according to an embodiment of this application; and
FIG. 23 is a schematic diagram of a structure of another signal processing apparatus according to an embodiment of this application.

### DESCRIPTION OF EMBODIMENTS

The following describes embodiments of this application in detail with reference to accompanying drawings.

For ease of understanding, the following provides example descriptions of some concepts related to embodiments of this application for reference. Details are as follows:

### 1. Detection apparatus

The detection apparatus mentioned in embodiments of this application may include a radar (radio detection and ranging, Radar, also referred to as radio detection and ranging) and a lidar (Light Detection and Ranging, LiDAR, also referred to as a light detection and ranging system), or may include another distance measurement apparatus, a speed measurement apparatus, or another light detection apparatus, for example, a fusion detection apparatus. An operating principle of the detection apparatus is to obtain information about an object by transmitting an electromagnetic wave signal and receiving a return signal, for example, to obtain information such as a distance to the object, and a speed, an orientation, or a height of the object.

The radar in this application may be an ultrasonic radar, a microwave radar, a millimeter-wave radar, or the like. It should be understood that, in some scenarios, the ultrasonic radar is alternatively classified as an auditory sensor. However, for ease of description, the ultrasonic radar is also classified as a radar sensor in embodiments of this application.

The lidar in this application may detect a field of view in a flash (flash) form, a scanning form, a phased array form, a mechanical rotation form, or the like, and may operate in a pulse form, a continuous wave form, or the like. When an operating manner is the scanning form, a scanning sequence, an angle of each scanning, and the like are not limited in this application.

The detection apparatus in embodiments of this application can be used in various fields such as intelligent driving, intelligent transportation, intelligent manufacturing, environment monitoring, surveying and mapping, and an uncrewed aerial vehicle, and can complete one or more functions of target detection, distance measurement, speed measurement, target tracking, imaging recognition, and the like.

The detection apparatus in embodiments of this application may be used in a vehicle-mounted detection apparatus (for example, a vehicle-mounted radar), a roadside detection apparatus (for example, an intersection radar), or the like, and may also be used in another device. For example, the detection apparatus may be installed on a device like an uncrewed aerial vehicle, a robot, a rail vehicle, a bicycle, a signal light, a speed measurement apparatus, or a base station. A position at which the detection apparatus is installed is not limited in embodiments of this application.

### 2. Detection signal

A detector of a detection apparatus may receive an electromagnetic wave (or sound wave) signal and convert the electromagnetic wave (or sound wave) signal into an electrical signal. In embodiments of this application, the electrical signal obtained based on the electromagnetic wave (or sound wave) signal is referred to as a detection signal, or a detection signal may be obtained by performing processing (for example, analog-to-digital conversion or filtering) on the electrical signal.

For example, the detection apparatus is a lidar. The detection apparatus may transmit a laser signal, and the detector of the detection apparatus may receive an optical signal and convert the optical signal into an electrical signal. The received optical signal may include a return signal of the signal transmitted by the detection apparatus, and a distance between an object and the detection apparatus may be calculated based on a time difference between the return signal and the transmitted signal.

It may be understood that the optical signal received by the detector may further include a background light signal. The background light signal in embodiments of this application may include a related optical signal of an ambient light source (for example, the related optical signal may be an optical signal directly from the ambient light source, or may be a reflected signal obtained by reflecting an optical signal of the ambient light source). The ambient light source may include one or more of a natural light source (for example, the sun), an artificial light source (for example, a street lamp, a car light, or a light source of another detection apparatus), or the like.

For example, the detection apparatus is a millimeter-wave radar. The millimeter-wave radar may transmit an electromagnetic wave signal, and the detector of the millimeter-wave radar may receive the electromagnetic wave signal and convert the electromagnetic wave signal into an electrical signal. A distance between an object and the millimeter-wave radar can be obtained by calculating round-trip time of the electromagnetic wave signal.

It may be understood that, as radars are more widely used, operating frequency bands of millimeter-wave radars are prone to overlap, resulting in co-channel interference and affecting accuracy of a detection result of the millimeter-wave radar.

### 3. Feature signal

The feature signal has a special waveform feature, and may be an electrical signal corresponding to a return signal.

Optionally, the feature signal may include at least one of a pulse signal, a peak signal, a rising edge signal (or referred to as a front-porch signal), a waveform center-of-mass signal, or the like. The pulse signal is a signal that fluctuates for a short time like a sphygmus signal. The peak signal is a signal corresponding to a highest value of a signal value in a period of time. The rising edge signal is a segment of signal whose signal value continuously increases in a period of time. The waveform center-of-mass signal is a signal corresponding to a center of mass position of waveform information.

Alternatively, the feature signal may be a signal that meets a feature. For example, a waveform feature that can be detected as an echo signal is obtained through presetting, pre-configuration, or calculation.

### 4. Strength information

In embodiments of this application, the intensity information may reflect an intensity of an optical signal, or reflect a quantity of received photons.

In a design, a detection element receives a photon, forms a voltage signal and/or a current signal based on the photon, and then converts the voltage signal and/or the current signal into intensity information of a plurality of pixels. A larger quantity of photons indicates a larger amplitude of a formed voltage signal and/or current signal, and a higher intensity of an optical signal, so that a pixel is displayed brighter. Different pixels have different intensity information, and a difference between brightness and darkness is formed, so as to obtain an image.

It should be noted that, for ease of description, in embodiments of this application, data representing intensity information of a detection region is referred to as an image, and a data format is not limited to an image format.

### 5. Detection region

The detection region is a physical world that can be detected, also called a field of view or field of view (field of view, FOV). During detection, there is a need for a line-of-sight (line of sight, LOS) region with uninterrupted signal (for example, laser or radio wave) transmission between a transmit end and a target object and/or between a receive end and the target object. The line-of-sight region may be understood as the detection region. A signal from the detection region may be transmitted to the receive end, and/or a signal transmitted by the detection apparatus may be transmitted to a target in the detection region. The foregoing example descriptions of the concepts may be applied in the following embodiments.

The following describes an application scenario and an architecture of this application.

The detection apparatus may be considered as an "eye" for an electronic device to sense an environment, and includes a visual sensor like a camera and a radar sensor. The radar sensor may include a lidar, a millimeter-wave radar, an ultrasonic radar, or the like. The lidar performs distance measurement based on time of flight of light, and is one of important sensors in sensing. A millimeter wave operates in a millimeter wave (millimeter wave) band, and an operating frequency band usually belongs to a frequency band of 30 GHz to 300 GHz (with a wavelength range of 1 mm to 10 mm). The millimeter-wave radar has characteristics of small size and light weight, and strong ability to penetrate fog, smoke and dust. The ultrasonic radar measures a distance based on a time difference between sending an ultrasonic wave and receiving the ultrasonic wave. The ultrasonic radar features simple data processing and a small size, and is widely used in scenarios such as vehicle reversing and obstacle distance measurement.

The radar sensor generally includes a transmitter and a detector. During detection, the transmitter generates a transmission signal to irradiate a detection region, and a target in the detection region may reflect the signal, so as to obtain a return signal of the transmission signal. The detector receives a signal from the detection region to obtain a detection signal. The signal from the detection region includes the return signal of the transmission signal. A distance to the target in the detection region may be determined based on a time interval between the transmission signal and the return signal of the transmission signal, so as to obtain point cloud data of the detection region. The point cloud data has high distance measurement precision, and a detection result of the point cloud data usually has a high weight when being used.

For example, an ADAS system generally includes a plurality of sensors, and an ADAS system equipped with a radar (and/or a lidar) usually gives a high weight to the radar (and/or the lidar) during multi-sensor fusion. In this case, if reliability of a detection result of the radar or the lidar is decreased, a decision error may occur on a device that uses the detection result, resulting in a negative impact.

The following uses a laser detection apparatus as an example for description. Embodiments of this application are also applicable to another type of detection apparatus.

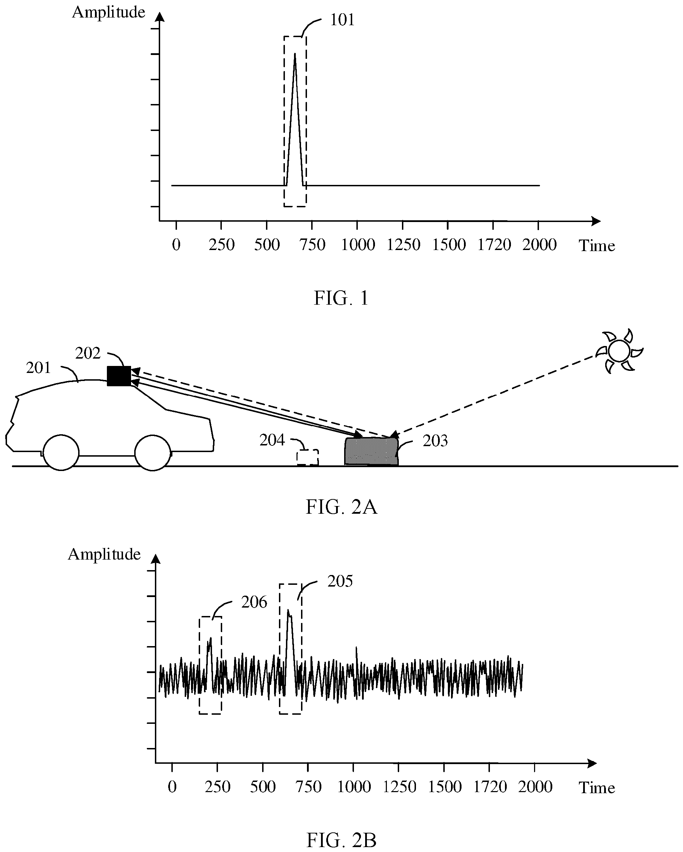

Refer to FIG. 1. FIG. 1 is a possible schematic diagram of a radar detection signal according to an embodiment of this application. For a detection signal shown in a part in FIG. 1, an echo signal (as shown in a region 101) obtained based on a return signal of a transmission signal has a wide dynamic range and has an obvious waveform feature, so that a distance to a target object in a detection region may be precisely obtained, and a detection result is highly precise and reliable. However, in an actual detection process, an optical signal of an ambient light source causes background light interference to a laser detection apparatus, so that reliability of a detection result is decreased. Specifically, the background light interference may cause a decrease in distance measurement performance of the laser detection apparatus, and increase of a possibility of a false alarm or missing detection of a signal. This reduces reliability of a detection result.

For example, refer to FIG. 2A and FIG. 2B. FIG. 2A is a schematic diagram of a possible background light interference scenario according to an embodiment of this application, and FIG. 2B is a schematic diagram of a possible detection signal according to an embodiment of this application. A detection apparatus 202 is installed in a vehicle 201. A transmission signal of the detection apparatus 202 may be reflected by an object 203. The reflected signal may trigger a detection element in a detector, to form an echo signal 205 shown in FIG. 2B. However, background light (for example, sunlight) may also trigger the detection element in the detector to form a noise signal. As shown in FIG. 2B, in the detection signal, because a dynamic range of the echo signal 205 is reduced, a "protrusion" degree of the echo signal 205 is not enough, and the echo signal 205 is not easily detected. Consequently, distance measurement performance of the detection apparatus 202 is reduced.

In addition, some noise may be mistakenly detected as an echo signal. As shown in a region 206, a noise signal is mistakenly detected as an echo signal. In this case, false distance information is generated. The detection apparatus 202 (or the vehicle 201) considers that both the "object 203" and an "object 204" exist. The detection apparatus 202 (or the vehicle 201) mistakenly considers that the "object 204" exists in front of the vehicle 201, but actually the "object 204" does not exist. This is referred to as a "false alarm". After the false alarm is generated, when there is no object in front of the vehicle 201, the vehicle 201 may decelerate or suddenly brake based on a detection result of the detection apparatus 202. This reduces driving comfort.

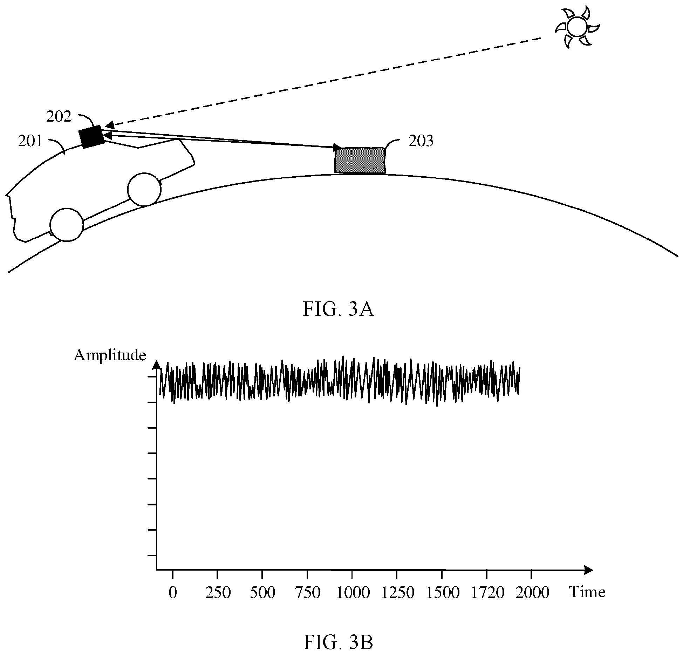

For another example, refer to FIG. 3A and FIG. 3B. FIG. 3A is a schematic diagram of a possible background light interference scenario according to an embodiment of this application, and FIG. 3B is a schematic diagram of a possible detection signal according to an embodiment of this application. For related descriptions, refer to the foregoing descriptions of FIG. 2A. As shown in FIG. 3A, when the background light (for example, the sunlight) is strong, for example, when the detection apparatus 202 is directly exposed to the sunlight or an object is highly reflective to the sunlight, a noise signal causes strong interference to a true echo signal. As shown in FIG. 3B, noise signals form an interference platform. Consequently, a true echo signal cannot be detected, and missing detection is caused. Alternatively, a true echo signal is difficult to detect due to an insufficient "protrusion" degree. This increases a possibility of missing detection. After the missing detection is generated, the vehicle 201 may mistakenly consider that there is no object 203 in front of the vehicle 201, and do not decelerate or brake. This may cause a traffic accident and reduce traveling safety of the vehicle.

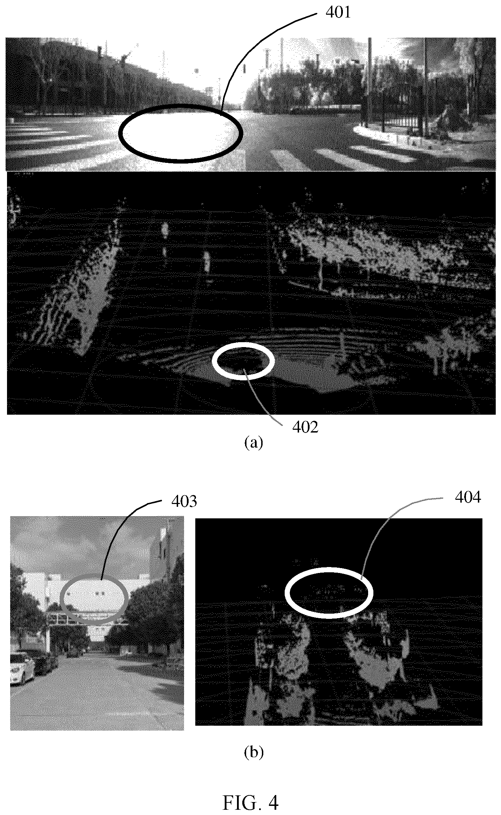

For example, refer to FIG. 4. FIG. 4 is a schematic diagram of a possible detection result according to an embodiment of this application. As shown in a part (a) of FIG. 4, reflected light of the sunlight in a region 401 in a detection region is strong, and missing detection of a signal is easily caused. In formed point cloud data, a hole occurs in point cloud data in a region 402, resulting in low reliability of a detection result. As shown in a part (b) of FIG. 4, a reflectivity of a white building is high. Therefore, when the detection apparatus detects the white building (for example, a building in a region 403) in the sunlight, missing detection of a signal is also easily caused. In formed point cloud data, because there are a small quantity of point clouds in a region 404, it is difficult to distinguish an object, and reliability is low.

It should be noted herein that, a signal that forms the background light interference may be a sunlight signal, or may be a signal of a signal source in another environment. Only the sunlight is used as an example for description. This is also applicable to other environmental light sources, such as a vehicle light, a street lamp, a searchlight, and a light source of another lidar. A position of an ambient light source may be in front of or behind the detection apparatus. The ambient light source may cause interference through direct radiation to the detection apparatus, or may cause interference by reflecting the ambient light source by an object. In addition, installation positions of the detection apparatus shown in FIG. 2A and FIG. 3A are merely examples.

In view of this, the technical solutions in embodiments of this application are provided. In embodiments of this application, indication information may be output based on a detection signal corresponding to a detection region. The indication information indicates that interference, for example, background light interference, exists in the detection region. According to the method in embodiments of this application, the indication information may be output together with a detection result, to improve information richness and accuracy, and reduce a calculation amount on a receive side, so as to improve user experience. In addition, whether interference exists can be determined based on a detection signal, and indication information is formed, to shorten a processing procedure. An alarm can be reported actively based on the indication information, so that the alarm is of high timeliness.

In this way, a detection apparatus (or a device on which the detection apparatus is installed, a device that uses the detection result, or the like) may perform reliability evaluation on the detection result of the detection region based on the indication information, and adjust confidence of the detection result, to avoid a security problem.

For example, when the indication information indicates that the background light interference of the detection region is strong, the confidence of the detection result may be reduced, to avoid the security problem.

For another example, in an autonomous driving system using a plurality of sensors, confidence of another detection result that is not interfered with by background light may be further improved, so that security is improved. For example, in the scenario shown in FIG. 2A, the detection apparatus 202 is interfered with by the sunlight, and may output the indication information to the vehicle. The vehicle 201 may reduce confidence of the detection result from the detection apparatus 202 based on the indication information. In addition, if a camera or a millimeter-wave radar is further configured in the vehicle 201, or the vehicle 201 can receive a result from a roadside radar, confidence of a detection result provided by a detection apparatus like the camera, the millimeter-wave radar, or the roadside radar can be improved, so as to plan a traveling operation more accurately, and improve safety and driving comfort.

For another example, when the indication information indicates that the background light interference in the detection region is strong, an autonomous driving vehicle or an assisted driving vehicle may remind a user to take over the vehicle, to avoid a safety problem. For example, in the scenario shown in FIG. 3A, the detection apparatus 202 is interfered with by the sunlight, and may report an alarm to the vehicle based on indication information. The vehicle 201 may remind, based on the indication information, the user in time to take over the vehicle, to avoid a security problem.

The following uses an example in which the detection apparatus includes a laser detection apparatus to describe a detection system and a detection apparatus in embodiments of this application.

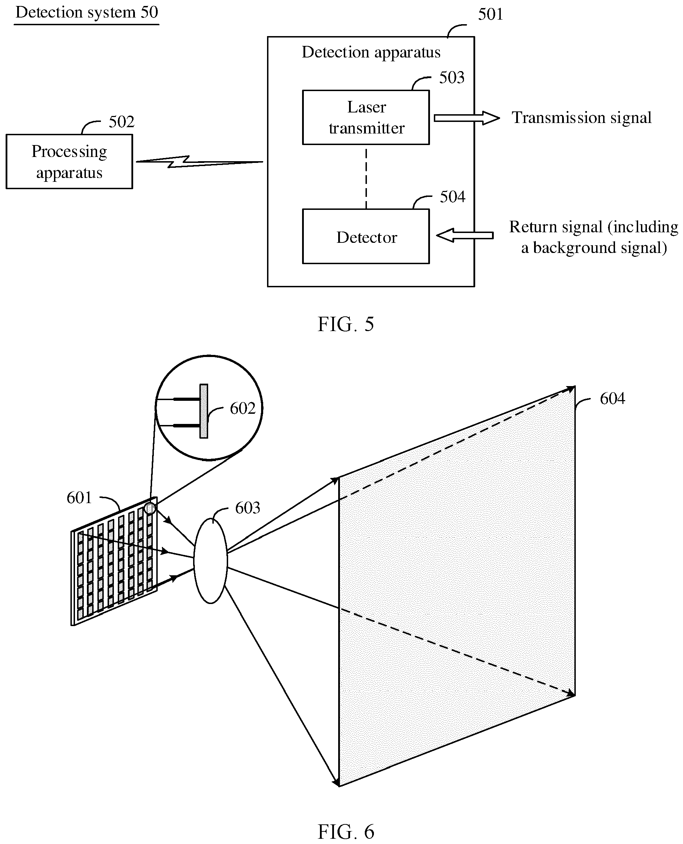

Refer to FIG. 5. FIG. 5 is a schematic diagram of a possible architecture of a detection system 50 according to an embodiment of this application. As shown in FIG. 5, the detection system 50 may include a detection apparatus 501 and a processing apparatus 502. The detection apparatus 501 is configured to perform detection on a detection region to obtain a detection signal, and the processing apparatus 502 is configured to perform calculation, signal processing, or the like. The apparatuses are described in detail as follows:
(1) The detection apparatus 501 may include a detector 504, and may further include a laser transmitter 503. Optionally, the detection apparatus 501 may further include one or more optical elements (not shown in the figure), for example, may include one or more of the following optical elements: a shaping component (for example, a collimating apparatus or an optical path shaping component), a reflection mirror, a lens, a window, a spectroscope, a swing mirror, a polygon mirror (Polygon), or a micro-oscillating mirror, a spectroscope, a polarizer, a filter, a homogenizer, or the like of a micro-electro-mechanical system (Micro-Electro-Mechanical System, MEMS). In the detection apparatus in embodiments of this application, a quantity, placement positions, placement sequences, sizes, and the like of optical elements in the detection apparatus are not limited.
(l.a) The laser transmitter 503 is configured to transmit an optical signal. Optionally, the laser transmitter 503 may include one or more light emitting elements. For example, the laser transmitter 503 may include one or more of the following lasers: a semiconductor laser, an optical fiber laser, a gas laser, or the like. The semiconductor laser may specifically include a light emitting element like a laser diode (laser diode, LD), a vertical cavity surface emitting laser (Vertical Cavity Surface Emitting Laser, VCSEL), an edge-emitting laser (edge-emitting laser, EEL), a distributed feedback laser diode (distributed feedback LD, DFB-LD), a distributed Bragg reflection laser diode (distributed Bragg reflection LD, DBR-LD), a grating coupled sampling reflection laser diode (Grating coupled sampling reflection LD, GCSR-LD), a micro-opto-electro-mechanical system laser diode (micro-opto-electro-mechanical system LD, MOEMS-LD), and the like.

The optical signal transmitted by the laser transmitter 503 may irradiate to the detection region by using one or more optical elements. The following enumerates three possible designs of a transmission process.

Design 1: The laser transmitter 503 may be an array light source. Refer to FIG. 6. FIG. 6 is a schematic operating diagram of a possible laser transmitter according to an embodiment of this application. A laser transmitter 601 is an 8×8 array light source formed by 64 light emitting elements. As shown in FIG. 6, each small grid in the laser transmitter 601 is a light emitting element 602. The laser transmitter 601 irradiates a detection region 604 by using an optical element 603. The array light source can irradiate to obtain an illumination lattice, and can provide a uniform irradiation field of view, thereby improving a detection effect.

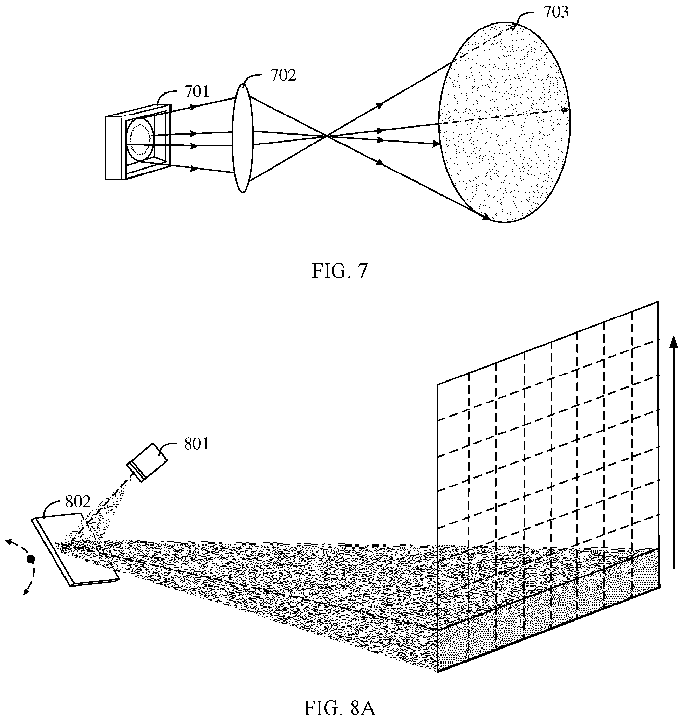

Design 2: The laser transmitter 503 may include one light emitting unit. Refer to FIG. 7. FIG. 7 is a schematic operating diagram of another possible laser transmitter according to an embodiment of this application. A laser transmission unit 701 includes one light emitting element, and an optical signal transmitted by the light emitting element irradiates into a detection region 703 by using an optical device 702.

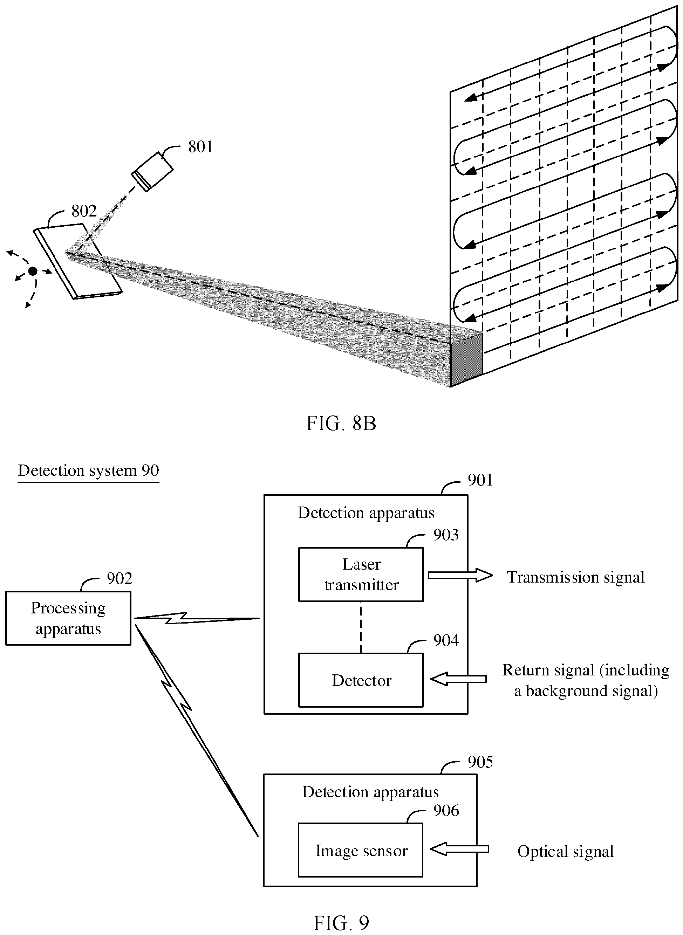

Design 3: The optical signal transmitted by the laser transmitter 503 may irradiate to the detection region according to a scanning mechanism, to implement scanning and detection on the detection region. Refer to FIG. 8A and FIG. 8B. FIG. 8A and FIG. 8B are some possible schematic operating diagrams of a laser transmitter according to an embodiment of this application. An optical signal transmitted by a laser transmitter 801 may irradiate to one sub-region of a detection region at one or more angles according to a scanning mechanism 802. The scanning mechanism 802 may include one or more of a polygon mirror, a micro-oscillating mirror, a swing mirror, or the like. A scanning form of the scanning mechanism 802 may include a scanning form like spot scanning or line scanning. A scanning sequence of the scanning mechanism is not limited in this application. For example, the scanning sequence may be from top to bottom, from bottom to top, or from left to right.

For example, FIG. 8A is a schematic diagram of line scanning. The scanning mechanism may adjust an angle in one direction to perform scanning detection on the detection region. FIG. 8B is a schematic diagram of spot scanning. The scanning mechanism may adjust angles in two directions to perform scanning detection on the detection region.

It should be understood that transmit optical paths shown in FIG. 6 to FIG. 8B are merely examples. For example, the transmission signal may further pass through one or more optical elements in the detection apparatus.

(1.b) The detector 504 is configured to receive an optical signal. Further, the detector 504 may obtain an electrical signal based on the optical signal. Optionally, the electrical signal may be output as a detection signal. Alternatively, optionally, the detection signal may be obtained by processing the electrical signal.

Optionally, the detector 504 may include one or more detection elements. For example, the detector 504 may include one or more of the following detection elements: a single-photon avalanche diode (single-photon avalanche diode, SPAD), a silicon photomultiplier (Silicon photomultiplier, SiPM), a semiconductor avalanche photodiode (avalanche photodiode, APD), a multi-pixel photon counter (multi-pixel photon counter, MPPC), an electron multiplying charge-coupled device (electron multiplying charge-coupled device, EMCCD), or the like.

Further, when the detector includes a plurality of detection elements, the plurality of detection elements may be arranged in an array. For example, the array may be an array of a specification like a 1×2 array, a 2×3 array, or a 3×3 array. A quantity of rows and a quantity of columns arranged in the array are not limited in this application.

For example, the detector 504 may be specifically an SPAD array, a SiPM array, or the like. When the detector 504 is an SPAD array or a SiPM array, because the SPAD array and the SiPM array are sensitive to an optical signal, in some processes, the SPAD array and the SiPM array have sensitivity of detecting a single photon, and therefore are easily saturated, and are easily interfered with by background light, causing an inaccurate detection result.

It should be noted that the received optical signal may optionally pass through one or more optical elements. When the electrical signal is obtained based on the optical signal, a detection element in the detector may convert the optical signal into the electrical signal, or another conversion unit other than the detection element in the detector may convert the optical signal into the electrical signal. This is not specifically limited herein.

(2) The processing apparatus 502 is configured to process the detection signal. The processing apparatus 502 may include one or more processors. It should be understood that, in this embodiment of this application, for ease of describing a computing function, a module having a computing and processing function is described as a processor. In a specific implementation process, the processing apparatus 502 may include any quantity of modules having a computing function. For example, the processing apparatus 502 may include one or more of the following modules: a central processing unit (central processing unit, CPU), an application processor (application processor, AP), a time-to-digital converter (Time-to-Digital Converter, TDC), a filter, a graphics processing unit (graphics processing unit, GPU), a microprocessor unit (microprocessor unit, MPU), an application-specific integrated circuit (Application-Specific Integrated Circuit, ASIC), an image signal processor (image signal processor, ISP), a digital signal processor (digital signal processor, DSP), a field programmable logic gate array (Field Programmable Gate Array, FPGA), a complex programmable logic device (Complex programmable logic device, CPLD), a coprocessor (assisting a central processing unit to complete corresponding processing and application), a microcontroller unit (Microcontroller Unit, MCU), a neural-network processing unit (neural-network processing unit, NPU), and/or the like.

Optionally, the processing apparatus 502 may be located inside the detection apparatus 501, or may be located outside the detection apparatus 501. When the processing apparatus 502 is located outside the detection apparatus 501, the processing apparatus 502 may communicate with the detection apparatus 501. A link for communication between the processing apparatus 502 and the detection apparatus 501 may be a wired link, a wireless link, a wired and wireless combined link, or the like. A communication form is not limited in this application.

Alternatively, optionally, the processing apparatus 502 may include a plurality of components, some components are located inside the detection apparatus 501, and some components are located outside the detection apparatus 501. For example, the processing apparatus 502 may include a digital-to-analog conversion module, a filtering module, a TOF de-conversion module, and a point cloud generation module. The digital-to-analog conversion module, the filtering module, and the TOF de-conversion module are located inside the detection apparatus 501, and the point cloud generation module is located outside the detection apparatus.

In a scenario, the detection apparatus 501 may perform distance detection to obtain point cloud data corresponding to a detection region. Specifically, the laser transmitter 503 generates a transmission signal to irradiate the detection region. The detector 504 may receive an optical signal from the detection region, and the optical signal from the detection region may include a return signal of the transmission signal and a background light signal. The detector 504 receives the optical signal from the detection region. The optical signal includes the return signal of the transmission signal. The processing apparatus 502 may determine distance information of a target object in the detection region based on a time interval between the transmission signal and the return signal of the transmission signal, to obtain the point cloud data of the detection region. The point cloud data has high distance measurement precision, and is widely used in fields such as intelligent driving, intelligent transportation, surveying and mapping, and intelligent manufacturing.

In another scenario, the detection signal obtained by the detection apparatus 501 may be used to perform distance detection, or may be used to obtain an image of the detection region, or may be used to obtain intensity information of the detection region. For example, the detector 504 may receive an optical signal from the detection region, and the optical signal from the detection region may include a return signal of a transmission signal and a background light signal. The return signal of the transmission signal is used to obtain point cloud data corresponding to the detection region, and the background light signal is used to perform imaging on the detection region, to obtain the image corresponding to the detection region.

In a design of this embodiment of this application, the processing apparatus 502 may obtain the detection signal corresponding to the detection region from the detection apparatus 501. The detection signal includes a noise signal of the detection region. The processing apparatus 502 outputs indication information based on the noise signal, where the indication information indicates that background light interference exists in the detection region.

It should be noted that the detection signal may be obtained by the detection apparatus 501 by detecting the detection region based on the transmission signal (active detection), or may be obtained by the detection apparatus 501 by receiving the optical signal from the detection region (passive detection, where, in this case, the laser transmitter may not transmit a laser signal).

In another design of this embodiment of this application, the processing apparatus 502 may determine, based on the image corresponding to the detection region, that detection of the detection apparatus 501 in a region is interfered with by background light. Alternatively, the image corresponding to the detection region may be detection data that includes the intensity information of the detection region.

Optionally, the image (or the intensity information of the detection region) corresponding to the detection region may be from the detection apparatus 501, or may be from another detection apparatus. For example, the following describes another possible detection system according to an embodiment of this application.

For example, FIG. 9 is a schematic diagram of another possible detection system according to an embodiment of this application. A detection system 90 shown in FIG. 9 includes a detection apparatus 901, a processing apparatus 902, and a detection apparatus 905. For related descriptions of the detection apparatus 901, a laser transmitter 903, and a detector 904, refer to the foregoing descriptions. The detection apparatus 901 may detect a detection region (referred to as a first detection region below for ease of description) based on a transmission signal, to obtain a detection signal (referred to as a first detection signal below for ease of description) corresponding to the first detection region.

The detection apparatus 905 may receive an optical signal from a detection region (referred to as a second detection region below for ease of description). An image sensor 906 in the detection apparatus 905 may obtain an electrical signal based on the optical signal. The electrical signal may be a detection signal (referred to as a second detection signal below for ease of description), or the electrical signal is processed to obtain the second detection signal. For example, the electrical signal may be used to perform imaging on the second detection region, to obtain an image (namely, the second detection signal) corresponding to the detection region. For another example, the electrical signal is used to obtain intensity information of a plurality of pixels, and the second detection signal may include the intensity information of the plurality of pixels.

The second detection region overlaps the first detection region. Optionally, the first detection region and the second detection region may coincide with each other, or may overlap. The processing apparatus 902 may obtain indication information based on the first detection signal and the second detection signal, where the indication information indicates that background light interference exists in the first detection region.

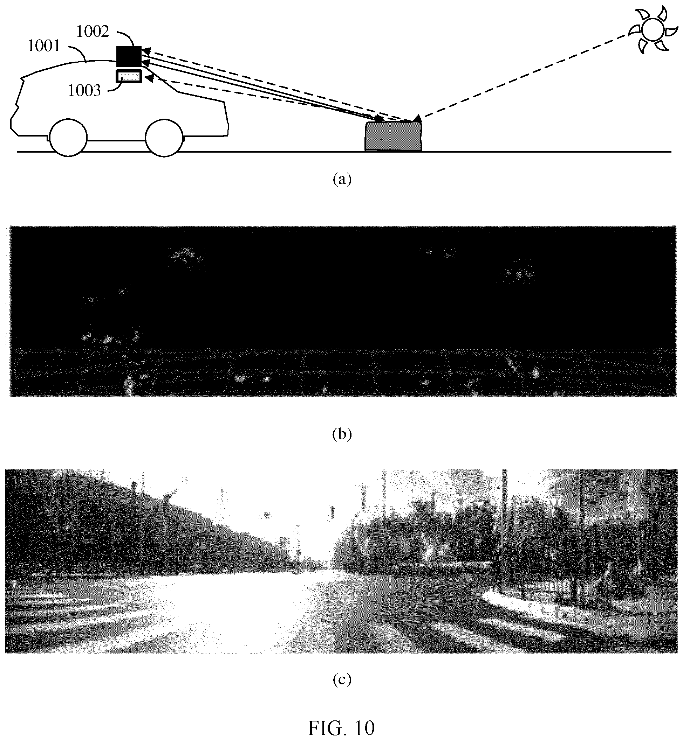

For example, FIG. 10 is a schematic diagram of a possible detection scenario according to an embodiment of this application. As shown in a part (a) of FIG. 10, a detection apparatus 1002 and a detection apparatus 1003 are configured in a vehicle 1001. The detection apparatus 1002 may detect a first detection region by using a transmission signal, to obtain point cloud data. The point cloud data is shown in a part (b) of FIG. 10. The detection apparatus 1003 may perform imaging on a second detection region, to obtain an image corresponding to the second detection region. The image is shown in a part (c) of FIG. 10. Because the first detection region and the second detection region overlap, whether background light interference exists in the first detection region may be determined based on the image and the point cloud data.

For example, the image may reflect background light luminance of different regions, and the background light interference may exist in detection of a region with a high background light intensity. The vehicle 1001 may reduce confidence of a detection result provided by the detection apparatus 1002. Alternatively, further, the vehicle 1001 may specifically reduce the confidence of the detection result in the region with the high background light intensity provided by the detection apparatus 1002, to improve security.

The following describes in detail a method in an embodiment of this application. In the following method, a laser detection apparatus is used as an example for description. Therefore, a detection signal is obtained based on an optical signal. However, a person skilled in the art should know that, the method is also applicable to an electromagnetic wave detection apparatus of another frequency band, or a detection apparatus with interference or co-channel interference, for example, a sound wave detection apparatus.

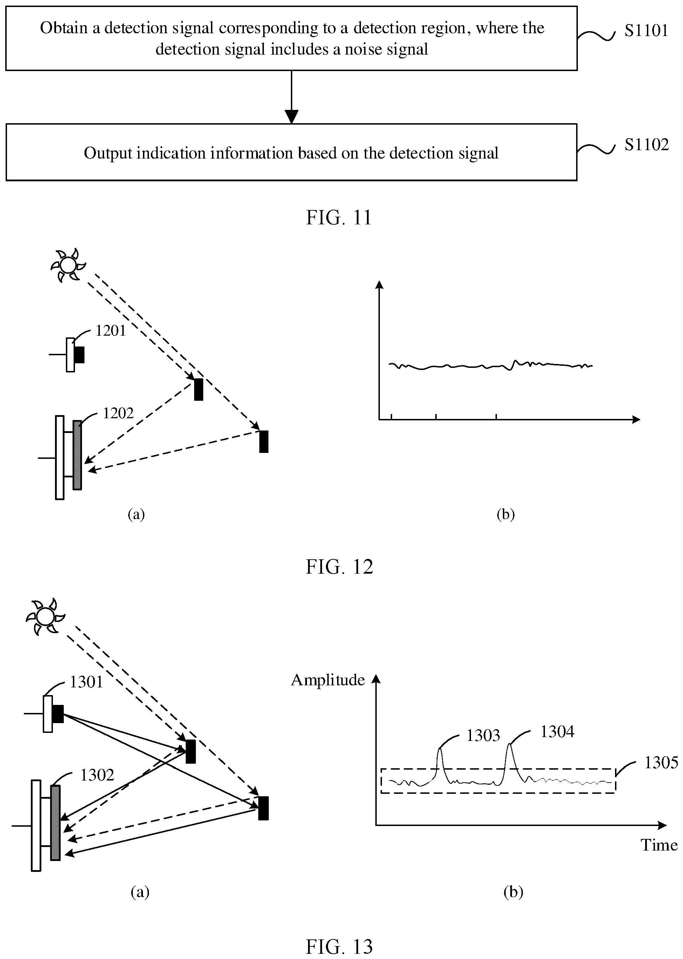

Refer to FIG. 11. FIG. 11 is a schematic flowchart of a signal processing method according to an embodiment of this application. Optionally, the method may be applied to the detection system shown in FIG. 5 or FIG. 9.

The signal processing method shown in FIG. 11 includes at least step S1101 and step S1102. Details are as follows:
Step S1101: A processing apparatus obtains a detection signal of a detection region.

The processing apparatus is an apparatus having a signal processing capability. Optionally, the processing apparatus may include one or more modules having a processing function.

The detection signal includes a noise signal of the detection region. The noise signal includes a signal obtained based on a background light signal, or the noise signal is a noise signal corresponding to background light. For example, a detection apparatus may obtain the detection signal based on an optical signal from the detection region. The optical signal from the detection region includes the background light signal. Therefore, the detection signal includes the noise signal corresponding to the background light.

For example, FIG. 12 is a possible schematic diagram of obtaining a detection signal. As shown in a part (a) of FIG. 12, the detection apparatus has no signal source, or a transmitter 1201 of the detection apparatus may not generate a transmission signal. A detector 1202 receives the background light signal from the detection region, to obtain the detection signal. As shown in a part (b) of FIG. 12, the detection signal includes the noise signal, and the noise signal corresponds to the background light.

Optionally, the optical signal from the detection region includes a return signal corresponding to a laser transmission signal, and the detection signal includes an echo signal corresponding to the return signal. An echo signal usually has a special waveform feature in waveform. Therefore, a signal that meets a waveform feature or a preset detection rule and that is in the detection signal may be an echo signal.

For example, FIG. 13 is a possible schematic diagram of obtaining a detection signal. As shown in a part (a) of FIG. 13, a transmitter 1301 may transmit a signal, and an object in the detection region may reflect the transmitted signal. A detector 1302 may receive a signal from the detection region, to obtain a detection signal. For example, the detection signal is shown in a part (b) of FIG. 13. The detection signal includes feature signals (echo signals), as shown by a pulse 1303 and a pulse 1304.

The detection signal also includes a noise signal, as shown in a region 1305. For descriptions of the feature signal, refer to the explanation of the foregoing terms. The pulse herein is only an example.

It should be noted that the foregoing manner of obtaining the detection signal is merely an example, and is not used as a limitation on an operating manner, a structure, and a component configuration position of the detection apparatus. The foregoing manner of obtaining the detection signal may be alternatively combined. For example, a plurality of detection manners may be combined in a time division manner and/or a frequency division manner. For another example, a plurality of detectors are disposed in the detection apparatus, some detectors perform detection in a detection manner shown in FIG. 12, and some detectors perform detection in a detection manner shown in FIG. 13.

The detection signal is obtained by performing detection on the detection region, and the processing apparatus may obtain a detection result of the detection region based on the detection signal. It may be understood that the detection result may include information indicating that a target exists in the detection region, or may include information indicating that the target does not exist in the detection region. In a possible design, when the detection signal includes an echo signal corresponding to the laser transmission signal, the detection result may indicate that one or more targets exist in the detection region.

Optionally, the detection result may be one or more of a digital signal, distance information, a target point, a point cloud, or the like.

The digital signal may be an electrical signal on which no processing (for example, processing such as filtering, noise reduction, or TOF de-converting) is performed. The digital signal may include information about a return signal from a target, and in this case, may indicate that at least one target exists in the detection region.

The distance information may reflect a distance between the target and the detection apparatus. For example, the processing apparatus obtains the distance through calculation based on a time difference between the echo signal and the laser transmission signal. The distance can be obtained only when the target exists (or the processing apparatus considers that the target exists). Therefore, it may be implicitly indicated that at least one target exists.

In some scenarios, the target point is a point-shaped object used to describe related information of the target. For example, the target point may include information such as a distance to the target, coordinates, a position, a color, a reflectivity, a reflection intensity, or a speed of the target. In some other scenarios, the target point is data of a pixel in output point cloud data.

The point cloud data is data recording information in a form of a point. For example, the point cloud data may include one or more target points, and may reflect target distribution, a distance to the target, and a reflectivity of the target in the detection region.

It should be understood that a target may exist in the detection region, or no target may exist in the detection region, and the detection result of the detection region may indicate that a target exists in the detection region, or may indicate that no target exists in the detection region. However, a situation indicated by the detection result may not completely match a target situation of a real detection region, and a matching degree is limited by a manufacturing process, a signal processing capability, and an actual detection environment. Optionally, the processing apparatus may obtain the detection signal from the detection apparatus. For example, the processing apparatus may be located inside the detection apparatus and connected to the detector in the detection apparatus, so as to obtain a detection signal from the detector. For another example, a communication module (or a communication interface) is deployed in the detection apparatus, and a communication module is also deployed in the processing apparatus. The processing apparatus may communicate with the detection apparatus through the communication module, to obtain the detection signal.

Step S1102: The processing apparatus outputs indication information based on the detection signal.

Specifically, the processing apparatus obtains the indication information based on the detection signal. Further, the processing apparatus outputs the indication information to a receiver side or a user.

The indication information indicates that background light interference exists in the detection region. For ease of understanding, the following enumerates several possible cases of the indication information.

Case 1: The indication information may have a plurality of values. When the indication information is a value (or several values), it may indicate that the background light interference exists. For example, the indication information may be a first field, and when the first field is 1, it indicates that the background light interference exists. Optionally, if the first field is 0, it indicates that there is no background light interference.

Case 2: The indication information includes alarm information, and the alarm information indicates a background light interference degree. For example, Table 1 is a schematic table of possible alarm information according to an embodiment of this application. As shown in Table 1, alarm information of one byte (or eight bits) indicates a background light interference degree.

"0×01" indicates that the background light interference is weak, and may indicate that the background light interference degree in the detection region is light. Similarly, "0×02" indicates that the background light interference degree in the detection region is medium, and other levels are deduced by analogy. It should be understood that the alarm information shown in Table 1 is merely an example. A quantity of levels included in the alarm information, a quantity of data bits used to indicate the alarm information, an indication form, and the like are not limited in this application. For example, in a specific implementation process, the alarm information may include more or fewer levels; or the alarm information may alternatively be indicated by more or fewer data bits; or the indication form may alternatively use another format, for example, "a", "b", "c", and "d", to respectively indicate a plurality of background light interference degrees.

**Table 1 Alarm information**

| Value | Description |
|---|---|
| 0×00 | No background light interference exists |
| 0×01 | Weak background light interference |
| 0×02 | Medium background light interference |
| 0×03 | Strong background light interference |
| 0×05 to 0×FF | Reserved |

Optionally, the alarm information may correspond to a single pixel, or may correspond to a pixel region; or a part of the alarm information may correspond to a pixel, and a part of the alarm information may correspond to a pixel region. For example, the indication information may include N pieces of alarm information corresponding to N pixels, and each pixel corresponds to one piece of alarm information. Related content is described in detail below.

Optionally, the alarm information may be obtained in one or more of the following manners: a correspondence, querying a table, mapping, fitting, real-time calculation, or the like.

For ease of understanding, the following describes an example of a possible implementation of obtaining the alarm information.

In an implementation 1, the background light interference degree is related to a range of the background light interference. The range of the background light interference may be a pixel range, a detection region range (or a field of view range), a quantity of detection elements, or the like.

The processing apparatus obtains, based on the detection signal, the range of the background light interference. The background light interference degree is indicated by the range of the background light interference.

For example, the detection signal includes signals from 100 detection elements, and the detection signal may reflect whether the detection elements are interfered with by the background light. The processing apparatus analyzes, based on the detection signal, the detection elements interfered with by the background light, and obtained indication information may be a quantity of detection elements interfered with by the background light. For example, if the quantity of detection elements interfered with by the background light is 80, the background interference degree is heavy. If the quantity of detection elements interfered with by the background light is 10, the background interference degree is light.

Alternatively, the alarm information may include a plurality of levels, and the plurality of levels may separately indicate background light interference degrees. For example, if a quantity n of detection elements interfered with by the background light meets the following formula: n≥80, a level is 1. If a quantity n of detection elements interfered with by the background light meets the following formula: 80>n≥50, a level is 2. The level 1 is higher than the level 2. Other levels are not enumerated one by one.

In an implementation 2, an intensity of the background light is related to the background light interference degree. For example, a higher background light intensity indicates a more severe background light interference degree. The processing apparatus obtains an intensity level of the background light based on the detection signal, and indicates, by using the intensity level of the background light, the background light interference degree.

For example, if the intensity of the background light in the detection region is greater than or equal to a first threshold and is less than a second threshold, the intensity level of the background light is the level 1, indicating that the background light interference degree is light. If the intensity of the background light in the detection region is greater than or equal to a second threshold, the intensity level of the background light is the level 2, indicating that the background light interference degree is heavy. The level 1 is higher than the level 2. Other levels are not enumerated one by one.

In an implementation 3, the background light interference degree is related to a background light interference range and an intensity of the background light. For example, a larger background light interference range and a stronger intensity of the background light indicate a more severe background light interference degree. The processing apparatus obtains the alarm information based on the detection signal. The alarm information comprehensively reflects the background light interference range and the intensity of the background light, and therefore may indicate the background light interference degree.

For example, the detection signal includes signals from 100 detection elements, and the detection elements are interfered with by background light of different intensity levels. If a quantity of detection elements interfered with by background light of a level-2 intensity exceeds 70, a level is a strong alarm. If the quantity of detection elements interfered with by background light of the level-2 intensity exceeds 40 but does not exceed 70, the level is a medium alarm. Other levels are not enumerated one by one.

It should be understood that the foregoing content describes the interference range by using only a quantity of interfered detection elements as an example. In a specific implementation process, the interference range may be further related to one or more of the following: a quantity of pixels, a quantity of pixel regions, an interfered field of view range, an interfered angle range, and the like. Examples are not provided herein one by one.

In some possible designs, the background light interference degree may be further related to a factor like interference duration. Examples are not provided herein one by one.

In an implementation 4, there is a correspondence between the background light interference degree and the detection performance. The processing apparatus may determine the detection performance of the detection apparatus based on a first detection signal. The background light interference degree is indicated by the detection performance (or an indicator related to the detection performance). Specifically, the detection performance is used to evaluate a capability of the detection apparatus to detect a target under a specific detection condition.

In another design, the detection performance is related to one or more of the following parameters: background light information, a quantity of interfered pixels or a quantity of interfered pixel regions, a distance between an object and the detection apparatus, a reflectivity of a target, a volume of the target, a position of the target in a field of view of the detection apparatus, an area of a cross section (Cross Section) of the target, an area of a radar cross section (Radar Cross Section, RCS), and the like. It should be noted that, the detection performance described herein may be overall detection performance of the detection apparatus, or may be detection performance of the detection apparatus in a part of the detection region (a part of the pixel region and a part of the distance range), which is subject to specific implementation.

For example, the detection performance of the detection apparatus is indicated in the following manner: When the intensity of the background light is S, the volume of the target is M1, the target is in the middle of the field of view of the detection apparatus, and the reflectivity of the target is R, a distance at which the target can be detected is D. Optionally, if the detection performance herein is overall detection performance, the intensity S of the background light herein may refer to uniform background light interference that is received by all pixels and whose intensity is S. Alternatively, the detection performance herein is detection performance of a partition (where the following uses a pixel region as an example for description), and is used to evaluate detection performance in a pixel region, where an intensity of background light in the pixel region is S.

In a possible design, when the intensity of the background light is 0, the volume of the target is M1, the target is in the middle of the field of view of the detection apparatus, and the reflectivity of the target is R, a distance at which the detection apparatus can detect the target is 100 meters. In this case, if it is determined, based on the first detection signal, that the detection performance of the detection apparatus is: Under a current noise signal condition, when the volume of the target is M1, the target is in the middle of the field of view of the detection apparatus, and the reflectivity of the target is R, a distance at which the target can be detected is 90 meters, it can be learned that a distance at which the detection apparatus can detect the target is related to the background light interference degree. Therefore, the detection performance may indicate a current background light interference degree.

For another example, the detection performance of the detection apparatus is indicated in the following manner: When the intensity of the background light is S, the volume of the target M1, the target is in the middle of the field of view of the detection apparatus, and a detection distance is D, a reflectivity required by the target that can be detected is R.

In a possible design, when the intensity of the background light is 0, the volume of the target is M1, the target is in the middle of the field of view of the detection apparatus, and the detection distance is D, the reflectivity required by the target that can be detected is 30%. In this case, if it is determined, based on the first detection signal, that the detection performance of the detection apparatus is: Under a noise signal condition, when the volume of the target is M1, the target is in the middle of the field of view of the detection apparatus, and the detection distance is D, the reflectivity required by the target that can be detected is 80%, it can be learned that the reflectivity required by the target that can be detected is related to the background light interference degree. Therefore, the detection performance may indicate the current background light interference degree.

In the foregoing manner, quantization is performed on the detection performance, so that the background light interference degree of the detection apparatus can be accurately located, so that precise indication information is output, and reliability of the indication information is improved.

In an implementation 5, the processing apparatus quantizes the detection performance based on the detection signal and an indicator, so as to obtain the alarm information. For example, the following enumerates two possible indicators:
(Indicator 1): a distance at which a target with a preset reflectivity can be detected. The processing apparatus may determine (or predict), based on the detection signal, the distance d at which the target with the preset reflectivity can be detected under a current noise signal condition. Here, d is related to the indication information.

In a design, the indication information includes a plurality of levels, a level indicates a background light interference degree, and different levels are obtained when d falls within different value ranges.

For example, if the processing apparatus determines that a distance d at which a target with a 90% reflectivity can be detected meets: d≥70 meters, the alarm information is a weak alarm, indicating that the background light interference degree is light. Similarly, if d meets: 70 meters >d≥30 meters, the alarm information is a medium alarm, indicating that the background light interference degree is medium. If d meets: 30 meters >d, the alarm information is a medium alarm, indicating that the background light interference degree is heavy.

In another design, a detection performance reduction degree may be quantized by using the indicator 1, and a heavier detection performance reduction degree indicates severer background light interference. For example, the alarm information includes a plurality of levels, and different levels indicate background light interference degrees. There is a correspondence between a detection performance reduction degree and a level.

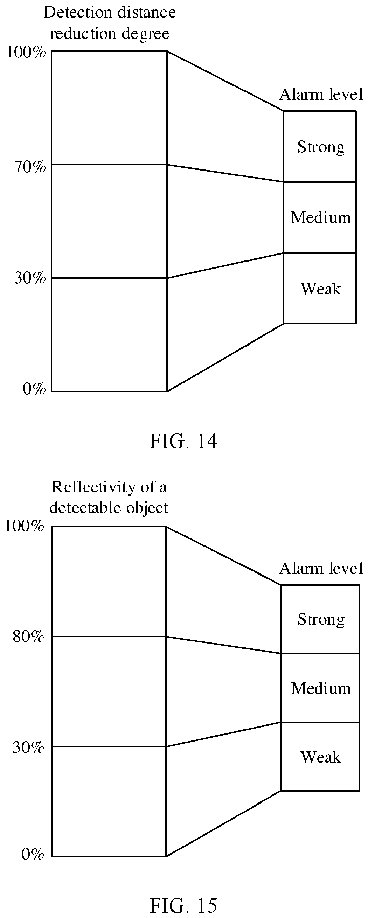

FIG. 14 is a schematic diagram of a correspondence between a detection distance reduction degree and alarm information. For example, a preset reflectivity is an 80% reflectivity. In an ideal case, a distance at which a target with the 80% reflectivity can be detected is 100 meters. The processing apparatus estimates, based on a current noise signal, that the distance at which the target with the 80% reflectivity can be detected is 80 meters. Compared with the ideal case, in a condition of the current noise signal, the distance at which the target can be detected is reduced by 20%, and falls within an interval from 0% to 30% (for example, 0% and 30% may be included). In this case, the alarm information is a weak alarm, indicating that a background light interference degree is light. It should be understood that the range division shown in FIG. 14 is merely an example. When a reduction degree is equal to a boundary, corresponding alarm information may be preset or configured based on a requirement. This is merely an example herein.

For another example, the processing apparatus estimates, based on the current noise signal, that the distance at which the target with the 80% reflectivity can be detected is 60 meters. Compared with the ideal case, in the condition of the current noise signal, the distance at which the target can be detected is reduced by 40%, and falls within an interval from 30% to 70% (for example, 70% may be included, but 30% is not included). In this case, the alarm information is a medium alarm, indicating that the background light interference degree is medium. Another situation is deduced by analogy.

(Indicator 2): a reflectivity of a target that can be detected at a preset distance. The processing apparatus may determine (or predict), based on the detection signal, the reflectivity r of the target that can be detected at the preset distance under a condition of a current noise signal. Here, r is related to the indication information.

In a design, the indication information includes a plurality of levels, a level indicates a background light interference degree, and different levels are obtained when r falls within different value ranges.

In another design, a detection performance reduction degree may be quantized by using the indicator 2, and a heavier detection performance reduction degree indicates severer background light interference. For example, different levels indicate background light interference degrees. There is a correspondence between a detection performance reduction degree and a level.

FIG. 15 is a schematic diagram of a correspondence between a detection distance reduction degree and alarm information. For example, the processing apparatus estimates, based on the current noise signal, that a target can be detected at 100 meters, a required reflectivity of the target is 20%, and a corresponding level is a weak alarm, indicating that a background light interference degree is light.

For another example, the processing apparatus estimates, based on the current noise signal, that the target can be detected at 100 meters, the required reflectivity of the target is 40%, and the corresponding level is a medium alarm, indicating that the background light interference degree is medium. Another situation is deduced by analogy.

It should be understood that the range division shown in FIG. 15 is merely an example. When the required reflectivity is equal to a boundary, the corresponding level may be preset or configured based on a requirement. This is merely an example herein.

The foregoing two indicators are merely examples for description, and it is not limited to using only the foregoing indicators. For example, in a specific implementation process, another indicator may also indicate the detection performance, for example, one or more of the following indicators: a correct ratio, a false detection rate, a missing detection rate, position precision, or an angular resolution. The correct ratio indicates a ratio of a detected correct point to all detected points. The false detection rate is a ratio of a detected error point to all detected points. The missing detection rate is a ratio of a point that is not detected to detected points. The detection position precision is used to describe a capability of a correspondence between a position of a perception result and a real position. The angular resolution indicates a capability of the detection apparatus to distinguish a minimum distance between two targets. Optionally, when a plurality of indicators in the foregoing indicators indicate the detection performance, different indicators may be further assigned different weights. Examples are not provided herein one by one.

Case 3: The indication information includes information about a noise signal. The information about the noise signal includes at least one of an average value of the noise signal, a variance of the noise signal, a level of the noise signal, or a waveform of the noise signal.

The average value of the noise signal may be, for example, 20, or 50. A unit of the average value of the noise signal may be preconfigured, predefined, or specified in a protocol, or with reference to a unit in the conventional technology. Different units can be converted to each other. For example, the average value of the noise signal may be a quantity of affected detection elements, for example, 20. The value 20 may correspond to an intensity of sunlight in a specific environment condition. In other words, the average value of the noise signal may be converted from the quantity of affected detection elements to the intensity of the sunlight in the specific condition. Therefore, the unit of the average value of the noise signal is not specifically limited in this application.

Optionally, noise signals of different degrees may be indicated by using levels of the noise signals. Table 2 is a schematic diagram of possible information about a noise signal according to an embodiment of this application. As shown in Table 2, an average value of the noise signal is indicated by using 1-byte level indication information. "0×00" indicates that the average value of the noise signal falls within a range of [0, 20). In this case, the noise signal is weak, indicating that accuracy of a detection result is slightly interfered with by background light, and reliability of the detection result is high. Similarly, "0×01" indicates that the average value of the noise signal falls within the range of [0, 20), indicating that the accuracy of the detection result is interfered with by the background light, the reliability of the detection result is reduced to some extent. Another situation is deduced by analogy. It should be understood that Table 2 is merely an example. A distribution range of the average value of the noise signal, a quantity of data bits used to indicate the noise signal, a unit of the noise signal, an indication form, and the like are not limited in this application.

**Table 2 Information about the noise signal**

| Value | Description |
|---|---|
| 0×00 | The average value of the noise signal falls within the following range: [0, 20) |
| 0×01 | The average value of the noise signal falls within the following range: [20, 40) |
| 0×02 | The average value of the noise signal falls within the following range: [40, 60) |
| 0×03 | The average value of the noise signal falls within the following range: [60, 80) |
| 0×04 | The average value of the noise signal falls within the following range: [80, 100) |
| 0×05 to 0×FF | Reserved |

Optionally, the information about the noise signal may further correspond to a single pixel, or may correspond to a pixel region; or a part of the information about the noise signal may correspond to a pixel, and a part of the information about the noise signal may correspond to a pixel region. For example, the detection signal may specifically include signals of N pixels, and the indication information may specifically indicate information about N noise signals corresponding to the N pixels.

Case 4: The indication information includes a range in which the background light interference exists.

Optionally, the range in which the background light interference exists includes one or more of a pixel region in which the background light interference exists, a detection sub-region in which the background light interference exists, a distance range in which the background light interference exists, or the like. For ease of understanding, the following provides several possible implementations.

In an implementation 1, the indication information includes a sub-region in which the background light interference exists, and the detection sub-region in which the background light interference exists is included in the detection region. For example, as shown in the part (a) of FIG. 4, the detection apparatus determines, based on the detection signal, that detection of the corresponding region 401 is interfered with by the background light. Information indicating the region 401 may be carried in the indication information.

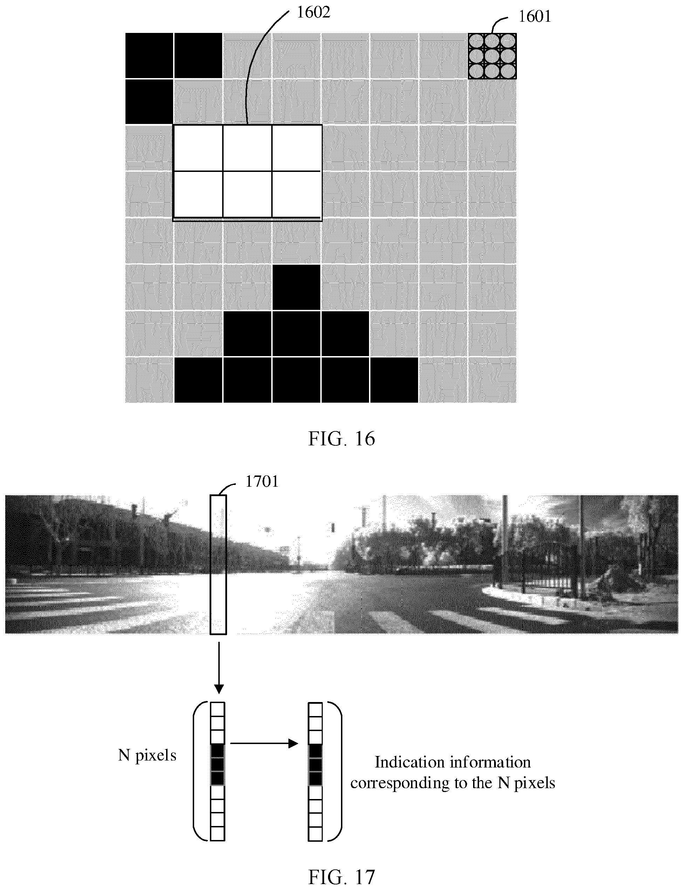

In an implementation 2, the indication information may include a pixel region in which the background light interference exists. FIG. 16 is a schematic diagram of pixels corresponding to a possible detection signal according to an embodiment of this application. The detection signal includes signals of a plurality of pixels (where, for ease of description, a signal of one pixel is referred to as a sub-signal). One pixel may correspond to one or more detection elements in the detector. For example, a signal of a pixel 1601 may be obtained through outputs of nine, that is, 3×3, detection elements on the detector and other pixels also correspond to a plurality of detection elements. The processing apparatus may determine, based on a sub-signal corresponding to a pixel in the detection signal, whether the pixel is interfered with by the background light. Further, a background light interference level may be determined. For example, if the detection apparatus determines, based on the detection signal, that six pixels shown in a region 1602 are interfered with by the background light, the indication information may specifically indicate the six pixels shown in the region 1602. Further, background light interference levels of interference to the six pixels may be indicated. For the background light interference level, refer to the level shown in Table 1 or Table 2. It should be noted that, in FIG. 16, 64, that is, 8×8, pixels are used as an example. In a specific implementation process, the detection signal may include more or fewer pixels.

Optionally, when an interfered pixel region is included, a granularity of the pixel region may have a plurality of cases. For example, an interference range of the indication information may be accurate to a single pixel, or may be accurate to a pixel region including a plurality of pixels, or pixels corresponding to the entire detection region may be used as a pixel region.

In an implementation 3, the processing apparatus may determine an intensity of the background light based on the detection signal, so as to determine an affected distance range. For example, it is determined, based on a noise signal in the detection signal, that the intensity of the background light is 80k kilo lux (lux), and when the intensity of the background light is 80 klux, reliability of a detection result obtained in a distance range greater than 100 meters from the detection apparatus is low. In this case, the indication information may indicate that an interfered distance range is a range greater than 100 meters.

It should be understood that the foregoing cases 1 to 4 are merely examples of designs of the indication information. The foregoing cases may be combined. For example, the indication information may include both the alarm information and a region in which the background light interference exists. The combination is not described herein again.

Optionally, after obtaining the indication information, the processing apparatus may output indication information to a receive side or a user. The receive side of the indication information may include a detection apparatus, a terminal device in which the detection apparatus is located, a device that uses a detection result, or the like. For example, the receive side may be a lidar, a detection system, a vehicle, a server, a roadside device, or the like. Optionally, the indication information may further output indication information to the user. For example, the indication information may trigger an alarm of voice, light, vibration, or a display by using a controller, to remind the user that background light interference exists. It should be noted that the indication information obtained by the processing apparatus and the indication information output to the receive side or the user herein may be different indication information. For example, after receiving the indication information, the processing apparatus performs processing on the indication information, and outputs processed indication information to a corresponding reminding apparatus. For ease of description herein, descriptions of the two types of indication information are not distinguished. However, a person skilled in the art may know that output information of different devices may be processed correspondingly, and may be collectively referred to as "indication information". Further, the reminding apparatus may be a display, a voice device, a seat device, a light device, or the like, depending on a specific reminding manner.

For ease of understanding, the following provides possible cases of three possible output manners.

Case 1: The processing apparatus may output indication information to a first device, and the first device is a receive side that receives the indication information. Optionally, the first device may be a device that uses the detection result of the detection apparatus. Further, the processing apparatus may output the indication information to the first device in an output manner that is predefined, preset, or specified in a protocol. The output manner includes a data format, an output periodicity, or the like. This output manner features simple transmission logic and a stable data amount.

Optionally, the first device may be a device on which the detection apparatus is installed or a device that uses the detection result of the detection apparatus. For example, the first device may be a terminal, a vehicle, a server, or the like.

Case 2: The processing apparatus may receive request information from a first device, and output indication information to the first device. The request information is used to request to obtain background light information. For example, the processing apparatus responds to request information of a microcontroller unit (Microcontroller Unit, MCU), where the request information includes a first field, and when the first field is a preset value, the request information indicates that the background light information is requested. The processing apparatus feeds back, based on the request information, information indicating background light interference. For another example, according to a protocol specification, a first message is a background light information request message, and the first device sends the first message to the processing apparatus, and the processing apparatus outputs indication information to the first device in response to the first message.

In the manner provided in Case 2, the processing apparatus may provide indication information required by a requester. The provided indication information is valuable and targeted, and a data transmission amount is small. This reduces a quantity of redundant information and reduces consumption of processing resources of the requester.

Case 3: The processing apparatus may further output the indication information to the user. For example, the processing apparatus may include an output control module like a display processor, an audio processor, or a vibration processor (or the processing apparatus is connected to the output control module), and the processing apparatus may output the indication information to the user by using the foregoing module. The display processor is used as an example. The indication information may trigger the display processor to present a reminder message, warning information, or the like, to remind the user that the background light interference exists in the detection region.

For another example, the processing apparatus may be included in a vehicle or connected to the vehicle, and the processing apparatus may trigger an alarm of a voice, light, a vibration prompt, a display, or the like by using a controller at a vehicle end. In a design, the foregoing alarm may be presented by using a controller in a cockpit domain of the vehicle, and a user in the cockpit may feel an alarm prompt.

It should be understood that the foregoing case is merely used to facilitate understanding of an output manner of the indication information, and is not intended to limit this embodiment of this application. The foregoing cases may also be combined when they are not mutually exclusive.

When the indication information is output, there may be a plurality of designs for an occasion of outputting the indication information. This application provides several possible implementation solutions.

Solution 1: A detection signal corresponds to detection of one or more wave positions. The processing apparatus obtains indication information based on the detection signal corresponding to the one or more wave positions, where the indication information indicates that the one or more wave positions are interfered with by background light.

Specifically, in a case, the detection apparatus performs scanning detection, and a detection region corresponding to a scanning angle (or a scanning angle range) is a wave position. Row scanning shown in FIG. 8A is used as an example. Scanning a row of detection regions by the detection apparatus is detection of a wave position.

For example, a transmission signal of the detection apparatus is used to detect a detection region at a first scanning angle, to obtain a detection signal corresponding to one or more wave positions. The first scanning angle may include one angle, or may include a plurality of angles, or may be an angle range. The processing apparatus may obtain, from the detection apparatus, the detection signal corresponding to the one or more wave positions, and obtain indication information based on the detection signal corresponding to the one or more wave positions.

In this way, indication information may be output after detection of one wave position (or more wave positions) in the detection region is completed, and timeliness of outputting the indication information is high. In addition, the alarm information may be accurate to one wave position, or even accurate to one pixel included in a detection signal corresponding to the wave position. Alarm content is detailed, rich, and accurate.

FIG. 17 is a schematic diagram of obtaining indication information according to an embodiment of this application. The detection device scans at a plurality of angles from left to right, to obtain a detection signal of one wave position at each angle. For example, when a region 1701 is detected at a first scanning angle, a detection signal of one wave position is obtained. The detection signal corresponding to the wave position includes signals of N pixels, where N is usually an integer greater than 0. As shown in FIG. 17, a detection signal corresponding to one wave position includes signals of 10 pixels.

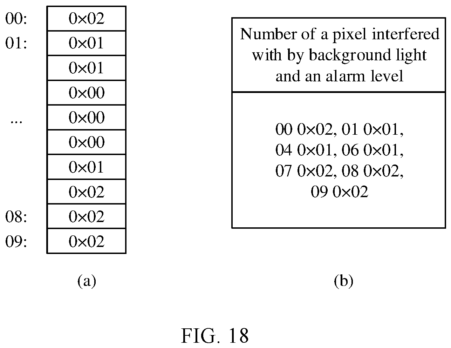

As described above, the indication information may indicate that the detection region 1701 is interfered with by background light, and may further indicate a pixel region interfered with by the background light (where the pixel region may include one pixel, or may include a plurality of pixels, and this is not limited herein). For example, the indication information may include indication information corresponding to N pixels. FIG. 18 is a schematic diagram of two types of possible indication information according to an embodiment of this application. In the indication information shown in a part (a) of FIG. 18, each pixel includes one level corresponding to the pixel (where the level shown in Table 1 is used as an example). The 10 pixels shown in FIG. 17 are respectively numbered from 00 to 09. A level of the pixel 00 is "0×02", indicating that the pixel is interfered with by medium background light. A level of the region 01 is 0×01, indicating that the region is interfered with by weak background light. The rest pixels are deduced by analogy.

The indication information shown in a part (b) of FIG. 18 indicates a number and a level of an interfered pixel. For example, "00 0×02" indicates that the pixel 00 is interfered with and the level is "0×02". For example, "01 0×01" indicates that the pixel 01 is interfered with and a level is "0×01". The rest pixels are deduced by analogy.

Solution 2: After detection of a detection region is completed, the processing apparatus may obtain, based on a detection signal corresponding to the detection region, indication information corresponding to one or more pixel regions. Further, the indication information specifically indicates an interference status of the one or more pixel regions.

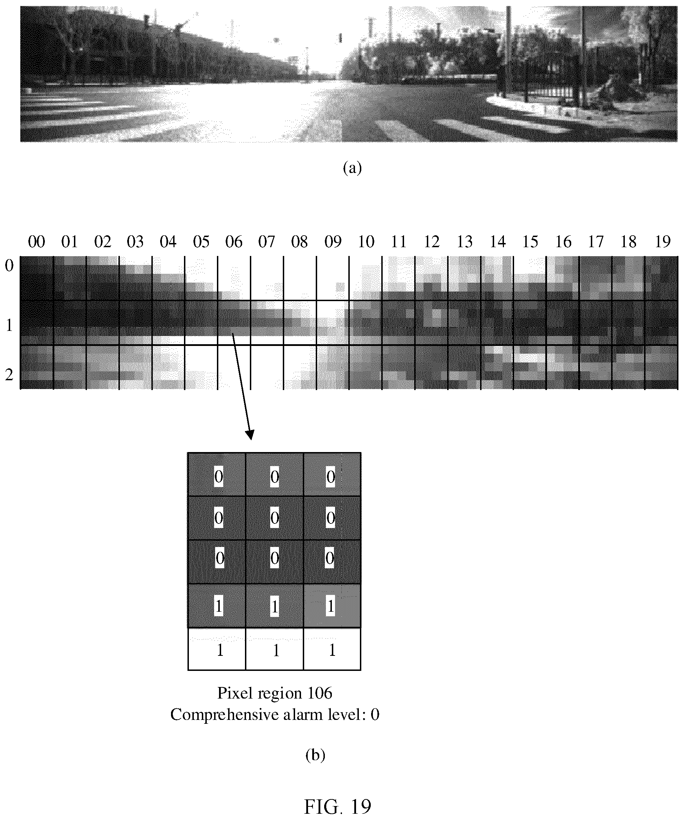

For example, FIG. 19 is another schematic diagram of obtaining indication information according to an embodiment of this application. A part (a) in FIG. 19 shows a detection region, and a part (b) in FIG. 19 shows a detection signal corresponding to the detection region (where it should be noted that the detection signal may be obtained through one time of detection, or may be obtained through a plurality of times of detection, for example, obtained through scanning and detection). The detection signal corresponding to the detection region includes signals of a plurality of pixels.

When indication information is output, the indication information may be output at a granularity of a pixel region. For example, pixels included in the detection signal may include 60 pixel regions, and one pixel region includes 15 pixels. The indication information includes a level of one or more pixel regions, and a level of each pixel region indicates a background light interference degree of the pixel region.

Optionally, a pixel region of one pixel region may be obtained by integrating levels of a plurality of pixels in the pixel region. For example, a pixel region 106 (a seventh pixel region in a second row) shown in FIG. 19 includes 15 pixels. A level corresponding to each pixel may be determined based on a sub-signal corresponding to the pixel. For ease of description herein, two levels, 0 and 1, are used, where 0 indicates that no alarm (a weak alarm) is reported, and 1 indicates that an alarm is reported. Among the 15 pixels, levels of 9 pixels indicate that no alarm (a weak alarm) is reported, and levels of 6 pixels indicate that an alarm is reported. The processing apparatus may obtain a level of the pixel region 106 by integrating levels of the 15 pixels. For example, the level of the pixel region 106 is 0, that is, no alarm (a weak alarm) is reported. The indication information may indicate that the level of the pixel region 106 is 0. Other pixel regions are similar. Details are not described one by one.

In the manner provided in the solution 2, after detection of a part or all of the detection region is completed, a detection signal corresponding to the detection regions is divided into one or more pixel regions. The indication information may specifically indicate interference to the pixel region, so that a data amount of the output indication information can be reduced, and resource consumption can be reduced.

Solution 3: The detection signal may alternatively be used entirely as a pixel region. For example, as shown in FIG. 19, the entire detection signal corresponding to the detection region is used as a pixel region, and the output indication information indicates a comprehensive alarm result for the entire detection region, to further reduce a data amount of the output indication information.

Content indicated by the indication information may be mixed with false alarm information, and the processing apparatus may verify the indication information, to improve accuracy of the content indicated by the indication information. This application provides several possible designs for verifying the content of the indication information.

Design 1: The processing apparatus verifies the content of the indication information based on point cloud data of the detection region. The point cloud data includes one or more target points, and the target point is determined based on an echo signal of a corresponding transmission signal.

For example, the indication information is alarm information. The processing apparatus determines the alarm information based on the detection signal. The alarm information may correspond to at least one (namely, one or more) pixel region (where the pixel region includes one or more pixels). Specifically, the alarm information may indicate that background light interference exists in a pixel region 1 and a pixel region 2.

In a possible case, the processing apparatus determines, based on the point cloud data of the detection region, that a target point exists in the pixel region 2. This indicates that background light interference to the pixel region 2 may not actually affect detection of the target point in the pixel region 2. Therefore, indication information for the pixel region 2 in the alarm information may be canceled. For example, before indication information is output, information used to indicate that "the background light interference exists in the pixel region 2" in the indication information is canceled or deleted. Alternatively, it may also be understood that the indication information indicates that "background light interference exists in the pixel region 1".

In another possible case, a threshold of a quantity of target points may be preset, and is referred to as a first threshold for ease of description. If the quantity of target points included in the pixel region is less than or equal to the first threshold, an alarm for the pixel region is maintained. If the quantity of target points included in the pixel region is greater than or equal to the first threshold, the alarm for the pixel region is canceled (for example, the indication information is set to not include the alarm for the pixel region).

In the manner of the foregoing design 1, the indication information may be verified with reference to the target point. If background light interference exists in a region, but detection of a target point is not affected, an alarm may not be reported for the region. This reduces a possibility of a false alarm and improves reasonableness and accuracy of the alarm.

Design 2: The processing apparatus verifies the indication information based on an image corresponding to the detection region. The following provides three possible implementations of verifying the content indicated by the indication information.

In an implementation 1, the image corresponding to the detection region usually includes a region with strong background light, namely, a bright region. For example, the region with strong background light may be a region with high image luminance, a region with a strong light intensity, or the like. The region with strong background light may be a region with strong background light relative to another pixel region in the image. Alternatively, the region with strong background light may be obtained according to a predefined or configured calculation rule.

The processing apparatus may determine, based on the image of the detection region and the indication information, whether a region in which the indication information indicates that background light interference exists belongs to the region with strong background light. For example, if the indication information indicates that background light interference exists in the detection region, and it is determined, based on the image, that there is a region with strong background light, the indication information passes verification. For example, if the indication information indicates that background light interference exists in a first pixel region, and it is determined, based on the image, that a region with strong background light in the image may include the first pixel region (or the region with strong background light and the first pixel region overlap), the indication information passes verification.

Optionally, the image may be from a camera, a camera lens, a thermal imaging device, an ultrasonic imaging device, a millimeter-wave imaging device, a laser imaging device, or the like.

In an implementation 2, the indication information is used to report an alarm for at least one pixel region, and a detection sub-region corresponding to the at least one pixel region does not include an object of no interest. In a design, the processing apparatus may verify the indication information based on the image and/or the point cloud data of the detection region, to determine that the indication information does not include an alarm for a pixel region corresponding to an object of no interest. In another design, the processing apparatus may verify the indication information based on the image and/or the point cloud data of the detection region, to determine that the indication information includes an alarm for a region corresponding to an object of interest.

In the foregoing manner, invalid alarms for objects of no interest can be reduced, accuracy and effectiveness of the indication information may be improved, a data amount of the indication information may be reduced, and user experience may be improved.

The following uses an example in which verification is performed based on the image for description. Specifically, the image of the detection region may generally include one or more objects in the detection region. In the one or more objects, some objects are objects of interest, and some objects are objects of no interest. The processing apparatus may identify an object of interest and an object of no interest in the detection region based on the image corresponding to the detection region. A manner of identifying the object of interest and the object of no interest may be preconfigured, preset, or obtained through model training.

For example, in a traffic scenario, the object of no interest may be a traffic-irrelevant object, and the object of interest may be a traffic-related object. The processing apparatus may determine the traffic-irrelevant object based on the image, and verify, based on a pixel region corresponding to the traffic-irrelevant object, whether the indication information includes an indication for the pixel region corresponding to the traffic-irrelevant object. Further, optionally, if the indication information includes the indication for the pixel region corresponding to the traffic-irrelevant object, this part of indication content may be canceled or deleted.

The traffic-irrelevant object in this embodiment of this application is, for example, but is not limited to the sky. Because detection of the sky does not affect or rarely affects driving decision-making, an alarm about the sky in the indication information may be canceled, so as to reduce invalid alarms and improve effectiveness of the indication information.

The traffic-related object in this embodiment of this application is, for example, but is not limited to, a vehicle, a rail, a building, an obstacle, a lane line, a vulnerable traffic participant (a bicycle, a pedestrian, or the like), a lane line, a road sign, a red street lamp, or the like. In a design, a pixel region P1 of the image includes both a traffic-related object and a traffic-irrelevant object, and the pixel region P1 corresponds to a pixel region P2 in the detection signal. In this case, if the indication information includes an alarm for the pixel region P2, the alarm should not be canceled. For example, if it is identified from the image that the pixel region P1 includes a truck, and the indication information includes an alarm for a pixel region P2 (where P2 belongs to a pixel region of the detection signal) corresponding to the truck, the alarm should not be canceled. Further, a granularity, accuracy, urgency, or the like of an alarm of a pixel region corresponding to the traffic-related object may be further improved, so as to improve security and user experience.

For another example, in a traffic scenario, an object in travelling space may be determined as a traffic-related object, and an object in remaining space is a traffic-irrelevant object. The travelling space may be obtained, for example, by using a lane line and a sidewalk line.

It should be understood that the image corresponding to the detection region may be from the detection apparatus, or may be from a third-party sensor. The image from the detection apparatus may be an image (for example, a grayscale image) from a radar detector (for example, an SPAD or a SiPM, where for descriptions, refer to the detector 504) of the detection apparatus, or may be an image from another detector in the detection apparatus (for example, a fusion detection apparatus includes both a radar detector and an image detector). The third-party sensor may include a sensor like a camera, a thermal imager, a millimeter-wave radar, or an ultrasonic radar.

For example, the detection system shown in FIG. 5 is used as an example. The detection signal of the detection region may be from the detection apparatus 501, and the image corresponding to the detection region may also be from the detection apparatus 501.

For another example, the detection system shown in FIG. 9 is used as an example. The detection signal of the detection region may be from the detection apparatus 901, and the image corresponding to the detection region may be from the detection apparatus 905.

In an implementation 3, the processing apparatus may verify the indication information based on the image (referred to as a first image for ease of description) from the detection apparatus, and verify the indication information based on the image (referred to as a second image for ease of description) from a third-party sensor, to further improve accuracy of the indication information.

Optionally, when the first image and the second image are used for verification, the processing apparatus may verify the indication information based on the first image and the second image at the same time; or may first verify the indication information based on the first image, and then verify the indication information based on the second image; or vice versa. Details are not described again.

Optionally, the design 1 and the design 2 may be combined in a case in which they are not mutually exclusive. For example, verification may be performed based on both the point cloud data and the image. For another example, when the object of interest is identified based on the image, identification may be performed with reference to the point cloud data of the detection region.

In the embodiment shown in FIG. 11, indication information may be output based on a detection signal corresponding to a detection region, and the indication information indicates that interference exists in the detection region. According to the method in this embodiment of this application, an alarm can be reported in time when interference occurs, to improve security.

The receive side can conveniently obtain an interference indication, so as to improve user experience and reduce calculation consumption of the receive side. Further, the indication information may be output together with a detection result, to improve information richness and accuracy.

The detection apparatus (or a device that uses the detection result) may perform reliability evaluation on the detection result of the detection region based on the indication information, and adjust confidence of the detection result, to avoid a security problem.

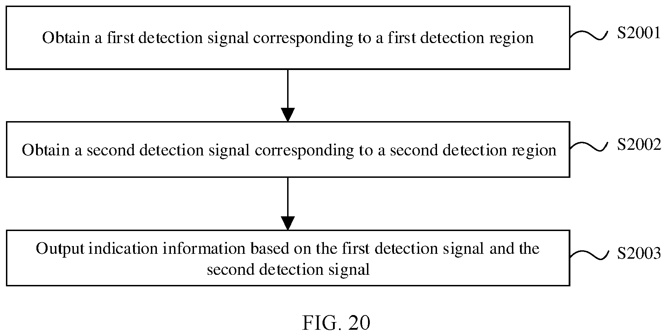

Refer to FIG. 20. FIG. 20 is a schematic flowchart of a signal processing method according to an embodiment of this application. Optionally, the method may be applied to the detection system shown in FIG. 5 or FIG. 9.

The signal processing method shown in FIG. 20 includes at least step S2001 to step S2003. Details are as follows:
Step S2001: A processing apparatus obtains a first detection signal corresponding to a first detection region.

The processing apparatus is an apparatus having a signal processing capability, and may include one or more modules having a processing function.

Specifically, the first detection signal corresponding to the first detection region is obtained by performing detection on the first detection region. Further, the first detection signal includes an echo signal corresponding to a laser transmission signal. For example, when detecting the first detection region, a detection apparatus may detect the first detection region based on a laser transmission signal. An optical signal received by the detection apparatus includes a range signal corresponding to the laser transmission signal. Correspondingly, the first detection signal includes the echo signal corresponding to the laser transmission signal.

Optionally, the processing apparatus may obtain a detection result of the first detection region based on the first detection signal. The detection result may indicate whether a target exists in the detection region. Further, when the target exists, the detection result may further indicate related information (for example, information such as a distance, coordinates, a position, a color, a reflectivity, a reflection intensity, or a speed) of the target.

Optionally, the detection result may be one or more of a digital signal, distance information, a target point, a point cloud, or the like. For a related description, refer to the description in S1101.

Optionally, the processing apparatus may obtain a detection signal from a first detection apparatus. For example, the processing apparatus may be located inside the first detection apparatus and connected to a detector in the first detection apparatus, so as to obtain the detection signal from a first detector. For another example, a communication module (or a communication interface) is deployed in the first detection apparatus, and a communication module is also deployed in the processing apparatus. The processing apparatus may communicate with the first detection apparatus through the communication module, to obtain the detection signal.

Step S2002: The processing apparatus obtains a second detection signal corresponding to a second detection region.

The first detection signal corresponding to the second detection region is obtained by performing detection on the second detection region, and may reflect one or more pieces of information such as brightness and a light intensity of the second detection region, and a shape, a color, or a texture of a target.

Optionally, the first detection signal may reflect a background light interference status in the first detection region. For example, the following uses two possible designs as examples.

Design 1: The first detection signal includes an image corresponding to the first detection region. An image may usually indicate brightness of a detection region, the brightness is caused by different luminance of background light. For example, background light interference may exist in a "bright" region of an image. Therefore, whether background light interference exists in the first detection region may be reflected based on the image. Further, a range in which the background light interference exists may be reflected. For example, a detection region range (physical range), a field of view range, a pixel region, and the like in which background light interference exists may be determined by using an image.

Design 2: The first detection signal indicates an intensity of background light, a level of the background light, or the like based on an image signal. For example, the first detection signal includes intensity information of a plurality of pixels, and the intensity information may indicate the intensity or the level of the background light.

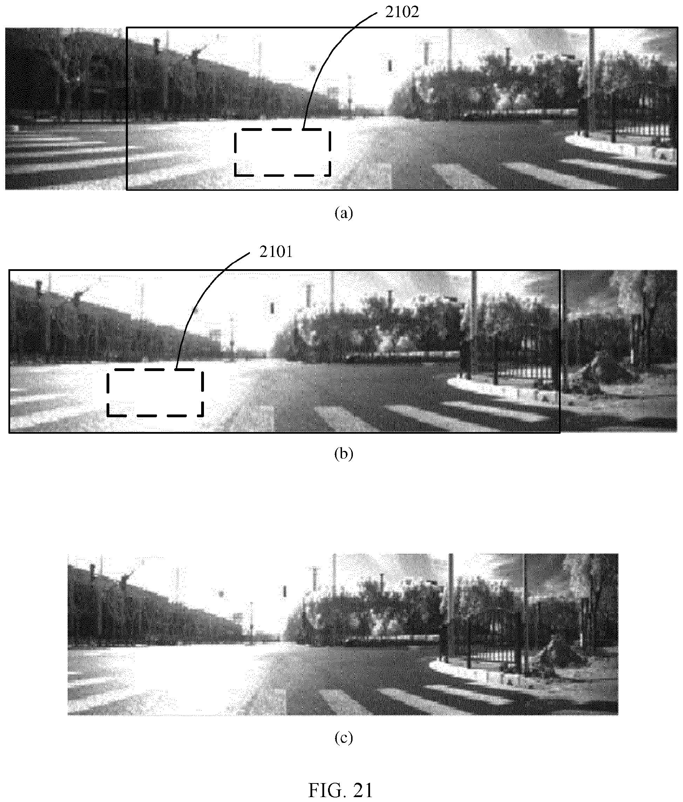

The first detection region and the second detection region overlap. Optionally, the first detection region and the second detection region may coincide with each other, or may overlap. For example, FIG. 21 is a schematic diagram of a possible detection region. A part (a) shown in FIG. 21 is a first detection region, a part (b) shown in FIG. 21 is a second detection region, where the first detection region and the second detection region overlap, and a part (c) shown in FIG. 21 is an overlapping part between the first detection region and the second detection region.

Optionally, the processing apparatus may obtain a second detection signal from a second detection apparatus. For example, the processing apparatus may be connected to the second detection apparatus, so as to obtain the second detection signal from the second detection apparatus. For another example, a communication module (or a communication interface) is deployed inside the second detection apparatus, and a communication module is also deployed in the processing apparatus. The processing apparatus may communicate with the second detection apparatus, to obtain the second detection signal. Further, optionally, the first detection apparatus and the second detection apparatus may be included in a same device.

In a possible design, a field of view range of the first detection apparatus is consistent with that of the second detection apparatus. In this case, the first detection region and the second detection region may coincide with each other.

In another possible design, the first detection apparatus and the second detection apparatus are a same apparatus, and the first detection signal and the second detection signal are from a same detector and have a same field of view. In this case, the first detection region and the second detection region may coincide with each other.

Step S2003: The processing apparatus outputs indication information based on the first detection signal and the second detection signal.

Specifically, the processing apparatus may obtain indication information based on the first detection signal and the second detection signal. Further, the processing apparatus may output the indication information to a receive side or a user.

The indication information indicates that background light interference exists in the first detection region. The second detection signal may reflect a background light interference status in the second detection region, and the processing apparatus may determine the background light interference status in the second detection region based on the second detection signal.

The second detection region and the first detection region overlap. If the second detection region is interfered with by the background light, the first detection region may also be interfered with by the background light. Therefore, when background light interference exists in the second detection region, the processing apparatus may indicate that the background light interference may also exist in the first detection region.

Further, the processing apparatus may determine, with reference to the second detection signal, whether a region interfered with by the background light is located in the first detection region. For example, if a region that is in the second detection region and that is interfered with by the background light is located in an overlapping part between the first detection region and the second detection region, the background light interference also exists in the first detection region.

For example, the processing apparatus may determine, based on an image corresponding to the detection region, a region interfered with by the background light. If the detection signal of the first detection region includes a detection signal corresponding to the region interfered with by the background light, the indication information indicates the region interfered with by the background light.

Optionally, the region interfered with by the background light may be a region with strong background light, for example, may correspond to a "bright" pixel region in the image, or may correspond to a pixel region with strong noise in the first detection signal. The region with strong background light may be a region with strong background light relative to another sub-region in the detection region. Alternatively, the region with strong background light may be obtained according to a predefined or configured calculation rule.

For example, the first detection signal is an image. The processing apparatus may obtain the region with strong background light based on the image corresponding to the first detection region. For another example, the first detection signal is intensity information of a plurality of pixels. The region with strong background light is obtained based on the intensity information of the plurality of pixels corresponding to the first detection region.

As shown in FIG. 21, the processing apparatus determines, based on an image of the part (b) (the second detection region) in FIG. 21, that a region 2101 is a region interfered with by the background light. The detection signal corresponding to the part (a) (the first detection region) in FIG. 21 includes a detection signal corresponding to a region interfered with by the background light, as shown in a region 2102. In this case, the indication information may indicate that the background light interference exists in the first detection region.

There may be a plurality of cases for content included in the indication information. The following uses three possible cases of the content of the indication information as an example.

Case 1: The indication information may have a plurality of values. When the indication information is a value (or several values), it may indicate that the background light interference exists. For related descriptions, refer to the descriptions of case 1 in step S1102.

Case 2: The indication information includes alarm information, and the alarm information indicates a background light interference degree. For related descriptions, refer to the descriptions of case 2 in step S1102.

Case 3: The indication information includes information indicating the background light, for example, one or more of an intensity of the background light, a level of the background light, distribution of the background light, or the like. For example, an average luminance value of pixels corresponding to an overlapping part is obtained based on luminance values of a plurality of pixels in an image, and the indication information may include the average luminance value of the pixels corresponding to the overlapping part.

Optionally, the luminance value may also be replaced with an illumination level, intensity indication information, or the like. This is not illustrated one by one herein.

For the level of the background light, a pixel granularity corresponding to the background light, and the like, refer to the related descriptions of the information about the noise signal in the case 3 in step S1102.

Case 4: The indication information includes a range in which the background light interference exists. The range in which the background light interference exists includes one or more of a pixel region in which the background light interference exists, a detection sub-region in which the background light interference exists, a distance range in which the background light interference exists, or the like. The detection sub-region in which the background light interference exists belongs to the first detection region or the second detection region.

As shown in FIG. 21, the indication information may further include information indicating the region 2102, to specifically indicate that the background light interference exists in the region 2102 in the first detection region.

For example, in another design, the processing apparatus may determine the intensity of the background light based on the image corresponding to the detection region, to determine the distance range interfered with by the background light. For example, it is determined, based on the image, that the intensity of the background light is 80 klux, and when the intensity of the background light is 80 klux, reliability of a detection result obtained in a distance range greater than 100 meters from the detection apparatus is low. In this case, the indication information may indicate that an interfered distance measurement range is a range greater than 100 meters.

It should be understood that the foregoing cases 1 to 4 are merely examples of designs of the indication information. The foregoing cases may be combined. For example, the indication information may include both the alarm information and a region in which the background light interference exists. The combination is not described herein again.

For an occasion for outputting the indication information, an output manner, and verification of the indication information, refer to related descriptions of step S 1102. Details are not described herein again.

In the embodiment shown in FIG. 20, the first detection region and the second detection region have an overlapping part. The processing apparatus may obtain the indication information based on the second detection signal corresponding to the second detection region and the first detection signal corresponding to the first detection region. The indication information indicates that interference exists in the first detection region.

The indication information may be output together with a detection result, to improve information richness and accuracy, and reduce a calculation amount on a receive side of the indication information, so as to improve user experience. In addition, an alarm can be reported actively through the indication information, and the alarm is of high timeliness.

The detection apparatus (or a device that uses the detection result) may perform reliability evaluation on the detection result of the first detection region based on the indication information, and adjust confidence of the detection result, to avoid a security problem.

The foregoing describes in detail the method in this embodiment of this application. The following provides an apparatus in embodiments of this application.

It may be understood that, a plurality of apparatuses provided in embodiments of this application, for example, a detection apparatus or a processing apparatus, include a corresponding hardware structure, software unit, or a combination of a hardware structure and a software structure for performing various functions, to implement functions in the foregoing method embodiments. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may implement the foregoing method embodiments by using different apparatus implementations in different use scenarios. It should not be considered that different implementations of the apparatus go beyond the scope of embodiments of this application.

In embodiments of this application, an apparatus (for example, a detection apparatus or a processing apparatus) may be divided into function units. For example, each function unit may be obtained through division based on a corresponding function, or two or more functions may be integrated into one processing unit. The integrated module may be implemented in a form of hardware, or may be implemented in a form of a software function unit. It should be noted that, in embodiments of this application, division into units is an example, and is merely logical function division. In actual implementation, another division manner may be used.

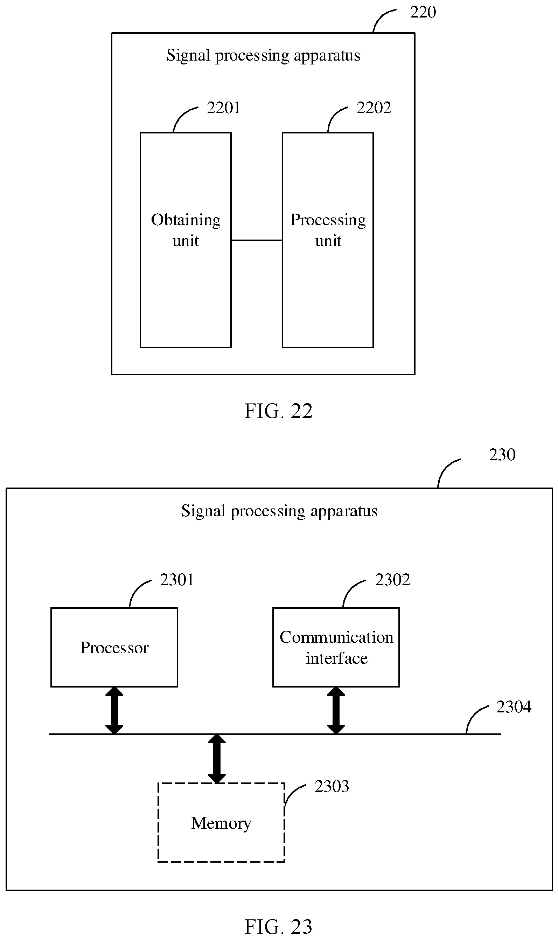

This application provides a possible processing apparatus. Refer to FIG. 22. FIG. 22 is a schematic diagram of a structure of a signal processing apparatus 220 according to an embodiment of this application. Optionally, the signal processing apparatus 220 may be an independent device like a vehicle, a lidar, a millimeter-wave radar, or a fusion detection radar, or may be a component included in an independent device, for example, a chip, a software module, or an integrated circuit. The signal processing apparatus 220 is configured to implement the foregoing signal processing method, for example, the signal processing method in the embodiment shown in FIG. 11 or FIG. 20.

In a possible implementation, the signal processing apparatus 2200 may include an obtaining unit 2201 and a processing unit 2202. The processing unit 2202 may be configured to implement a calculation or processing function of the foregoing signal processing method, for example, S1102, and/or may be configured to support another process of the technology described in the foregoing method. The obtaining unit 2201 may be configured to perform a signal obtaining operation in the foregoing signal processing method, for example, S1101, and/or may be configured to support another process of the technology described in this specification, for example, a process of outputting indication information or receiving request information. In some possible implementation scenarios, the obtaining unit 2201 may be alternatively replaced with a communication interface module and/or a transceiver module, and the interface module and/or the transceiver module may be configured to support another process of the technology described in the foregoing method.

In a possible design, the signal processing apparatus 220 is configured to implement the signal processing method in the embodiment shown in FIG. 11.

The obtaining unit 2201 is configured to obtain a first detection signal corresponding to a first detection region, where the first detection signal includes a noise signal of the first detection region.

The processing unit 2202 is configured to output indication information based on the first detection signal.

The indication information indicates that interference exists in the first detection region.

Optionally, the interference may be one or more of background light interference, millimeter wave interference, sound wave interference, and the like.

In a possible implementation, the first detection signal may be from a detection apparatus, for example, a laser detection apparatus (for example, a lidar), a millimeter-wave radar, an ultrasonic radar, or an image sensor.

For example, the first detection signal is from a light detection apparatus (for example, a lidar), and the indication information may specifically indicate that background light interference exists in the first detection region.

In another possible implementation, the first detection signal may be from a detector in the laser detection apparatus. Further, optionally, the detector may be an array detector including a plurality of detection elements.

In another possible implementation, the first detection signal is a noise signal corresponding to background light.

In another possible implementation, the noise signal is a noise signal corresponding to background light, and the first detection signal further includes an echo signal corresponding to a laser transmission signal. The method further includes: outputting a first detection result based on the first detection signal, where the first detection result indicates that one or more targets exist in the first detection region.

In another possible implementation, the indication information includes alarm information, and the alarm information indicates a background light interference degree.

In another possible implementation, the background light interference degree corresponds to detection performance, and a predefined or preconfigured correspondence exists between the background light interference degree and the detection performance.

In another possible implementation, the detection performance is related to one or more of the following parameters:
background light information, a quantity of interfered pixels or a quantity of interfered pixel regions, a distance between an object target and the detection apparatus, a reflectivity of a target object, a volume of the target object, a position of the target object in a field of view of the detection apparatus, or the like.

In another possible implementation, the alarm information is related to at least one of the following two indicators:
an indicator 1: a distance at which a target with a preset reflectivity can be detected; and
an indicator 2: a reflectivity of a target that can be detected at a preset distance.

In another possible implementation, the alarm information corresponds to at least one (namely, one or more) pixel region of the detector, and each pixel region includes one or more pixels.

In another possible implementation, a detection sub-region corresponding to the at least one pixel region does not include a traffic-irrelevant object, and the traffic-irrelevant object includes the sky.

In another possible implementation, the first detection signal includes an echo signal corresponding to the laser transmission signal.

The at least one pixel region does not include a target point, or a quantity of target points in the at least one pixel region is less than a preset value.

The target point is obtained based on the echo signal corresponding to the laser transmission signal.

In another possible implementation, the alarm information includes at least one of a range in which the background light interference exists, a background light interference level, and the like.

Further, optionally, the range in which the background light interference exists includes at least one of a pixel region in which the background light interference exists, a detection sub-region in which the background light interference exists, or a distance range in which the background light interference exists.

The detection sub-region in which the background light interference exists is included in the first detection region.

In another possible implementation, the indication information includes information about the noise signal.

The information about the noise signal includes one or more of an average value of the noise signal, a variance of the noise signal, a level of the noise signal, a waveform of the noise signal, or the like.

In another possible implementation, the processing unit 2202 is further configured to:
verify, based on an image and/or point cloud data of the first detection region, content indicated by the indication information.

In another possible implementation, the processing unit 2202 is further configured to:
output the alarm information to a first device. The first device may be a detection apparatus, or the first device is a terminal device in which a detection apparatus is located, a device that uses a detection result of the first detection region, or the like. For example, the first device may be a lidar, a detection system, a vehicle, a server, a roadside device, or the like.

In another possible implementation, the obtaining unit 2201 is further configured to receive request information from the first device, where the request information is used to request the background light information.

The processing unit is further configured to output the alarm information to the first device.

For related descriptions, refer to the description in FIG. 11.

In another possible design, the signal processing apparatus 220 is configured to implement the signal processing method in the embodiment shown in FIG. 20.

The obtaining unit 2201 is configured to obtain a first detection signal corresponding to a first detection region, where the first detection signal includes an echo signal corresponding to a laser transmission signal.

The obtaining unit 2201 is further configured to obtain a second detection signal corresponding to a second detection region, where the second detection region overlaps the first detection region.

The processing unit 2202 is configured to output indication information based on the first detection signal and the second detection signal.

The indication information indicates that interference exists in the first detection region.

Optionally, the interference may be one or more of background light interference, millimeter wave interference, sound wave interference, and the like.

In a possible implementation, the second detection signal may be from an image detection apparatus, for example, a laser detection apparatus, an image sensor, or a thermal imaging sensor.

The first detection signal is from a distance measurement apparatus, for example, a laser detection apparatus (for example, a lidar), a millimeter-wave radar, an ultrasonic radar, or an image sensor.

For example, the first detection signal is from a light detection apparatus (for example, a lidar), and the indication information may specifically indicate that background light interference exists in the first detection region.

In another possible implementation, the second detection signal corresponding to the second detection region includes image information corresponding to the first detection region.

The image information of the second detection region may be an image of the second detection region, or may include intensity information, grayscale information, or the like of a plurality of pixels.

Alternatively, optionally, the second detection signal indicates an intensity or a level of background light based on an image signal.

In another possible implementation, the processing unit 2202 is further configured to:
output a first detection result based on the first detection signal, where the first detection result indicates that one or more targets exist in the first detection region.

In another possible implementation, the indication information includes alarm information, and the alarm information indicates a background light interference degree.

In another possible implementation, the background light interference degree corresponds to detection performance, and a predefined or preconfigured correspondence exists between the background light interference degree and the detection performance.

In another possible implementation, the detection performance is related to one or more of the following parameters:
background light information, a distance between a target and a detection apparatus, a reflectivity of the target, a volume of the target, or a position of the target in a field of view of the detection apparatus.

In another possible implementation, the alarm information is related to at least one of the following two indicators:
an indicator 1: a distance at which a target with a preset reflectivity can be detected; and
an indicator 2: a reflectivity of a target that can be detected at a preset distance.

In another possible implementation, the alarm information corresponds to at least one pixel region, and each pixel region includes one or more pixels.

In another possible implementation, a detection sub-region corresponding to the at least one pixel region does not include a traffic-irrelevant object, and the traffic-irrelevant object includes the sky.

In another possible implementation, the at least one pixel region does not include a target point, or a quantity of target points in the at least one pixel region is less than a preset value.

The target point is obtained based on the echo signal corresponding to the laser transmission signal.

In another possible implementation, the alarm information further indicates a range in which the background light interference exists.

The range in which the background light interference exists includes one or more of a pixel region in which the background light interference exists, a detection sub-region in which the background light interference exists, a distance range in which the background light interference exists, or the like.

The detection sub-region in which the background light interference exists is included in the first detection region.

In another possible implementation, the indication information includes one or more of an intensity average value, an intensity variance, and the like of the background light.

In another possible implementation, the processing unit 2202 is further configured to:
output the indication information to a first device. The first device may be a detection apparatus, or the first device is a terminal device in which a detection apparatus is located, a device that uses a detection result of the first detection region, or the like. For example, the first device may be a lidar, a detection system, a vehicle, a server, a roadside device, or the like.

In another possible implementation, the obtaining unit 2201 is further configured to receive request information from the first device, where the request information is used to request the background light information.

The processing unit 2202 is further configured to output the alarm information to the first device.

For related descriptions, refer to the description in FIG. 20.

Refer to FIG. 23. FIG. 23 is a schematic diagram of a structure of another possible signal processing apparatus 230 according to an embodiment of this application.

The signal processing apparatus 230 may be an independent device like a lidar, a millimeter-wave radar, an ultrasonic radar, a fusion detection radar, or a vehicle, or may be a component included in an independent device, for example, a chip, a software module, or an integrated circuit. The signal processing apparatus 230 may include at least one processor 2301 and a communication interface 2302. Optionally, at least one memory 2303 may be further included. Further, optionally, a connection line 2304 may be further included. The processor 2301, the communication interface 2302, and/or the memory 2303 are/is connected through the connection line 2304, and communicate with each other through the connection line 2304 to transfer a control and/or data signal.
(1) The processor 2301 is a module for performing an arithmetic operation and/or a logical operation, and may specifically include one or more of the following apparatuses: a CPU, an MCU, an AP, a TDC, a filter, a GPU, an MPU, an ASIC, an ISP, a DSP, an FPGA, a CPLD, a coprocessor (assisting a central processing unit in completing corresponding processing and application), an NPU, and/or the like.
(2) The communication interface 2302 may be configured to provide an information input or output for the at least one processor. In some possible scenarios, the communication interface 2302 may include an interface circuit. In addition/alternatively, the communication interface 2302 may be configured to receive data sent from the outside and/or send data to the outside. For example, the communication interface 2302 may include a wired link interface like an Ethernet cable, or may be a wireless link (Wi-Fi, Bluetooth, universal wireless transmission, an in-vehicle short-range communication technology, another short-range wireless communication technology, or the like) interface. Optionally, the communication interface 2302 may further include a transmitter (for example, a radio frequency transmitter or an antenna), a receiver, or the like coupled to the interface.

Optionally, if the signal processing apparatus 230 is an independent device, the communication interface 2302 may include a receiver and a transmitter. The receiver and the transmitter may be a same component or different components. When the receiver and the transmitter are the same component, the component may be referred to as a transceiver.

Optionally, if the signal processing apparatus 230 is a chip or a circuit, the communication interface 2302 may include an input interface and an output interface. The input interface and the output interface may be a same interface, or may separately be different interfaces.

Optionally, a function of the communication interface 2302 may be implemented by using a transceiver circuit or a dedicated transceiver chip. The processor 2301 may be implemented by using a dedicated processing chip, a processing circuit, a processor, or a general-purpose chip.

(3) The memory 2303 is configured to provide storage space, and the storage space may store data such as an operating system and a computer program. The memory 2303 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The foregoing enumerated functions and actions of the modules or units in the signal processing apparatus 230 are merely examples for description.

Function units in the signal processing apparatus 230 may be configured to implement the foregoing signal processing method, for example, the method described in the embodiment shown in FIG. 11 or FIG. 20. To avoid repetition, detailed descriptions are omitted herein.

Optionally, the processor 2301 may be a processor that is specially configured to perform the foregoing method (referred to as a dedicated processor for ease of differentiation), or may be a processor that performs the foregoing method by invoking a computer program (referred to as a dedicated processor for ease of differentiation). Optionally, the at least one processor may further include both a dedicated processor and a general-purpose processor.

Optionally, when the computing device includes at least one memory 2303, if the processor 2301 implements the foregoing method by invoking a computer program, the computer program may be stored in the memory 2303.

An embodiment of this application further provides a chip system. The chip system includes a processor and a communication interface. The communication interface is configured to receive and/or send data, and/or the communication interface is configured to provide an input and/or an output for the processor. The chip system is configured to implement the foregoing signal processing method, for example, the method in FIG. 11 or FIG. 20.

An embodiment of this application further provides a computer-readable storage medium. The computer-readable storage medium stores instructions. When the instructions are run on at least one processor, the foregoing signal processing method, for example, the method in FIG. 11 or FIG. 20, is implemented.

An embodiment of this application further provides a terminal. The terminal is configured to implement the foregoing signal processing method, for example, the method shown in FIG. 11 or FIG. 20.

Optionally, the terminal may include one or more of the processing apparatus, the signal processing apparatus (for example, the signal processing apparatus 220 or the signal processing apparatus 230), the detection apparatus, the detection system, and the like.

Optionally, the terminal is a vehicle, an uncrewed aerial vehicle, or a robot. Alternatively, the terminal may be any possible smart home device, intelligent wearable device, intelligent manufacturing device, or the like.

An embodiment of this application further provides a computer program product. The computer program product includes computer instructions. When the computer program product is executed by a computing device, the foregoing signal processing method, for example, the method shown in FIG. 11 or FIG. 20, is implemented.

In embodiments of this application, the word "example", "for example" or the like is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In embodiments of this application, the term "at least one" indicates one or more, and the term "a plurality of" indicates two or more. "At least one of the following items (pieces)" or a similar expression thereof indicates any combination of these items, including a single item (piece) or any combination of a plurality of items (pieces). For example, at least one item (piece) of a, b, or c may represent a, b, c, (a and b), (a and c), (b and c), or (a, b, and c), where a, b, and c may be singular or plural. The term "and/or" describes an association relationship between associated objects and represents that three relationships may exist. For example, A and/or B may represent the following three cases: Only A exists, both A and B exist, and only B exists, where A and B may be singular or plural. The character "/" generally indicates an "or" relationship between associated obj ects.

In addition, unless otherwise specified, ordinal numbers such as "first" and "second" used in embodiments of this application are used to distinguish between a plurality of obj ects, and are not intended to limit an order, a time sequence, priorities, or importance of the plurality of objects. For example, a first device and a second device are merely for ease of description, but do not indicate differences in structures, importance, and the like of the first device and the second device. In some embodiments, the first device and the second device may alternatively be a same device.

According to the context, the term "when" used in the foregoing embodiments may be interpreted as a meaning of "if", "after", "in response to determining", or "in response to detecting". The foregoing descriptions are only optional embodiments of this application, but are not intended to limit this application. Any modification, equivalent replacement, or improvement made within the concept and principle of this application should fall within the protection scope of this application.

A person of ordinary skill in the art may understand that all or some of the steps of embodiments may be implemented by hardware or a program instructing related hardware. The program may be stored in a computer-readable storage medium. The storage medium mentioned above may be a read-only memory, a magnetic disk, an optical disc, or the like.

## Claims

1. A signal processing method, comprising:
obtaining a first detection signal corresponding to a first detection region, wherein the first detection signal comprises a noise signal of the first detection region; and
outputting indication information based on the first detection signal, wherein
the indication information indicates that background light interference exists in the first detection region.

2. The method according to claim 1, wherein the first detection signal is a noise signal corresponding to background light.

3. The method according to claim 1, wherein the noise signal is a noise signal corresponding to background light, and the first detection signal further comprises an echo signal corresponding to a laser transmission signal; and the method further comprises:
outputting a first detection result based on the first detection signal, wherein the first detection result indicates that at least one target exists in the first detection region.

4. The method according to any one of claims 1 to 3, wherein the indication information comprises alarm information, and the alarm information indicates a background light interference degree.

5. The method according to claim 4, wherein the background light interference degree corresponds to detection performance, and a predefined or preconfigured correspondence exists between the background light interference degree and the detection performance.

6. The method according to claim 5, wherein the detection performance is related to one or more of the following parameters:
background light information, a quantity of interfered pixels or a quantity of interfered pixel regions, a distance between a target and a detection apparatus, a reflectivity of the target, a volume of the target, or a position of the target in a field of view of the detection apparatus.

7. The method according to any one of claims 4 to 6, wherein the alarm information is related to at least one of the following two indicators:
an indicator 1: a distance at which a target with a preset reflectivity can be detected; and
an indicator 2: a reflectivity of a target that can be detected at a preset distance.

8. The method according to any one of claims 4 to 7, wherein the alarm information corresponds to at least one pixel region of a detector, and each pixel region comprises one or more pixels.

9. The method according to claim 8, wherein a detection sub-region corresponding to the at least one pixel region does not comprise a traffic-irrelevant object, and the traffic-irrelevant object comprises the sky.

10. The method according to any one of claims 4 to 9, wherein the alarm information further indicates a range in which the background light interference exists; and
the range in which the background light interference exists comprises at least one of a pixel region in which the background light interference exists, a detection sub-region in which the background light interference exists, or a distance range in which the background light interference exists, and the detection sub-region in which the background light interference exists is comprised in the first detection region.

11. The method according to any one of claims 1 to 10, wherein the indication information comprises information about the noise signal; and
the information about the noise signal comprises one or more of an average value of the noise signal, a variance of the noise signal, or a waveform of the noise signal.

12. The method according to any one of claims 1 to 11, wherein before the outputting indication information, the method further comprises:
verifying, based on an image and/or point cloud data of the first detection region, content indicated by the indication information.

13. The method according to any one of claims 1 to 12, wherein the outputting indication information comprises:
outputting the indication information to a first device, wherein the first device is a detection apparatus or the first device is a terminal device in which a detection apparatus is located.

14. The method according to any one of claims 1 to 13, wherein the method further comprises:
receiving request information from the first device, wherein the request information is used to request the background light information; and
the outputting indication information comprises:
outputting the indication information to the first device.

15. A signal processing method, comprising:
obtaining a first detection signal corresponding to a first detection region, wherein the first detection signal comprises an echo signal corresponding to a laser transmission signal;
obtaining a second detection signal corresponding to a second detection region, wherein the second detection region overlaps the first detection region; and
outputting indication information based on the first detection signal and the second detection signal, wherein
the indication information indicates that background light interference exists in the first detection region.

16. The method according to claim 15, wherein the second detection signal corresponding to the second detection region comprises image information corresponding to the second detection region; or
the second detection signal indicates an intensity or a level of background light based on an image signal.

17. The method according to claim 15 or 16, wherein the method further comprises:
outputting a first detection result based on the first detection signal, wherein the first detection result indicates that at least one target exists in the first detection region.

18. The method according to any one of claims 15 to 17, wherein the indication information comprises alarm information, and the alarm information indicates a background light interference degree.

19. The method according to claim 18, wherein the background light interference degree corresponds to detection performance, and a predefined or preconfigured correspondence exists between the background light interference degree and the detection performance.

20. The method according to claim 19, wherein the detection performance is related to one or more of the following parameters:
background light information, a quantity of interfered pixels or a quantity of interfered pixel regions, a distance between a target and a detection apparatus, a reflectivity of the target, a volume of the target, or a position of the target in a field of view of the detection apparatus.

21. The method according to any one of claims 18 to 20, wherein the alarm information is related to at least one of the following two indicators:
an indicator 1: a distance at which a target with a preset reflectivity can be detected; and
an indicator 2: a reflectivity of a target that can be detected at a preset distance.

22. The method according to any one of claims 18 to 21, wherein the alarm information corresponds to at least one pixel region of a detector, and each pixel region comprises one or more pixels.

23. The method according to claim 22, wherein a detection sub-region corresponding to the at least one pixel region does not comprise a traffic-irrelevant object, and the traffic-irrelevant object comprises the sky.

24. The method according to any one of claims 15 to 23, wherein the alarm information further indicates a range in which the background light interference exists; and
the range in which the background light interference exists comprises at least one of a pixel region in which the background light interference exists, a detection sub-region in which the background light interference exists, or a distance range in which the background light interference exists, and the detection sub-region in which the background light interference exists is comprised in the first detection region.

25. The method according to any one of claims 15 to 24, wherein the outputting indication information comprises:
outputting the indication information to a first device, wherein the first device is a device that uses a detection result of the first detection region.

26. The method according to any one of claims 15 to 25, wherein the method further comprises:
receiving request information from the first device, wherein the request information is used to request the background light information; and
the outputting indication information comprises:
outputting the indication information to the first device.

27. A signal processing apparatus, comprising:
an obtaining unit, configured to obtain a first detection signal corresponding to a first detection region, wherein the first detection signal comprises a noise signal of the first detection region; and
a processing unit, configured to output indication information based on the first detection signal, wherein
the indication information indicates that background light interference exists in the first detection region.

28. The apparatus according to claim 27, wherein the first detection signal is a noise signal corresponding to background light.

29. The apparatus according to claim 27, wherein the noise signal is a noise signal corresponding to background light, and the first detection signal further comprises an echo signal corresponding to a laser transmission signal; and
the processing unit is further configured to output a first detection result based on the first detection signal, wherein the first detection result indicates that at least one target exists in the first detection region.

30. The apparatus according to any one of claims 27 to 29, wherein the indication information comprises alarm information, and the alarm information indicates a background light interference degree.

31. The apparatus according to claim 30, wherein the background light interference degree corresponds to detection performance, and a predefined or preconfigured correspondence exists between the background light interference degree and the detection performance.

32. The apparatus according to claim 31, wherein the detection performance is related to one or more of the following parameters:
background light information, a quantity of interfered pixels or a quantity of interfered pixel regions, a distance between a target and a detection apparatus, a reflectivity of the target, a volume of the target, or a position of the target in a field of view of the detection apparatus.

33. The apparatus according to any one of claims 30 to 32, wherein the alarm information is related to at least one of the following two indicators:
an indicator 1: a distance at which a target with a preset reflectivity can be detected; and
an indicator 2: a reflectivity of a target that can be detected at a preset distance.

34. The apparatus according to any one of claims 30 to 33, wherein the alarm information corresponds to at least one pixel region, and each pixel region comprises one or more pixels.

35. The apparatus according to claim 34, wherein a detection sub-region corresponding to the at least one pixel region does not comprise a traffic-irrelevant object, and the traffic-irrelevant object comprises the sky.

36. The apparatus according to any one of claims 30 to 35, wherein the alarm information further indicates a range in which the background light interference exists;
the range in which the background light interference exists comprises at least one of a pixel region in which the background light interference exists, a detection sub-region in which the background light interference exists, or a distance range in which the background light interference exists; and
the detection sub-region in which the background light interference exists is comprised in the first detection region.

37. The apparatus according to claim 27, wherein the indication information comprises information about the noise signal; and
the information about the noise signal comprises one or more of an average value of the noise signal, a variance of the noise signal, or a waveform of the noise signal.

38. The apparatus according to any one of claims 27 to 37, wherein the processing unit is further configured to:
verify, based on an image and/or point cloud data of the first detection region, content indicated by the indication information.

39. The apparatus according to any one of claims 27 to 38, wherein the processing unit is further configured to:
output the indication information to a first device, wherein the first device is a detection apparatus or the first device is a terminal device in which a detection apparatus is located.

40. The apparatus according to any one of claims 27 to 39, wherein the obtaining unit is further configured to receive request information from the first device, wherein the request information is used to request the background light information; and
the processing unit is further configured to output the indication information to the first device.

41. A signal processing apparatus, comprising:
an obtaining unit, configured to obtain a first detection signal corresponding to a first detection region, wherein the first detection signal comprises an echo signal corresponding to a laser transmission signal, wherein
the obtaining unit is further configured to obtain a second detection signal corresponding to a second detection region, wherein the second detection region overlaps the first detection region; and
a processing unit, configured to output indication information based on the first detection signal and the second detection signal, wherein
the indication information indicates that background light interference exists in the first detection region.

42. The apparatus according to claim 41, wherein the second detection signal corresponding to the second detection region comprises image information corresponding to the second detection region; or
the second detection signal indicates an intensity or a level of background light based on an image signal.

43. The apparatus according to claim 41 or 42, wherein the processing unit is further configured to:
output a first detection result based on the first detection signal, wherein the first detection result indicates that at least one target exists in the first detection region.

44. The apparatus according to any one of claims 41 to 43, wherein the indication information comprises alarm information, and the alarm information indicates a background light interference degree.

45. The method according to claim 44, wherein the background light interference degree corresponds to detection performance, and a predefined or preconfigured correspondence exists between the background light interference degree and the detection performance.

46. The apparatus according to claim 45, wherein the detection performance is related to one or more of the following parameters:
background light information, a quantity of interfered pixels or a quantity of interfered pixel regions, a distance between a target and a detection apparatus, a reflectivity of the target, a volume of the target, or a position of the target in a field of view of the detection apparatus.

47. The apparatus according to any one of claims 44 to 46, wherein the alarm information is related to at least one of the following two indicators:
an indicator 1: a distance at which a target with a preset reflectivity can be detected; and
an indicator 2: a reflectivity of a target that can be detected at a preset distance.

48. The apparatus according to any one of claims 44 to 47, wherein the alarm information corresponds to at least one pixel region of a detector, and each pixel region comprises one or more pixels.

49. The apparatus according to claim 48, wherein a detection sub-region corresponding to the at least one pixel region does not comprise a traffic-irrelevant object, and the traffic-irrelevant object comprises the sky.

50. The apparatus according to any one of claims 44 to 49, wherein the alarm information further indicates a range in which the background light interference exists; and
the range in which the background light interference exists comprises at least one of a pixel region in which the background light interference exists, a detection sub-region in which the background light interference exists, or a distance range in which the background light interference exists, and the detection sub-region in which the background light interference exists is comprised in the first detection region.

51. The apparatus according to any one of claims 41 to 50, wherein the outputting indication information comprises:
outputting the indication information to a first device, wherein the first device is a device that uses a detection result of the first detection region.

52. The apparatus according to any one of claims 41 to 51, wherein the method further comprises:
receiving request information from the first device, wherein the request information is used to request the background light information; and
the outputting indication information comprises:
outputting the indication information to the first device.

53. A signal processing apparatus, wherein the signal processing apparatus comprises at least one processor and a communication interface, wherein
the communication interface is configured to receive and/or send data, and/or the communication interface is configured to provide an input and/or an output for the processor; and
the at least one processor is configured to implement the method according to any one of claims 1 to 26.

54. A lidar, wherein the lidar comprises a transmitter, a detector, and at least one processor, the transmitter is configured to generate a laser transmission signal, the detector is configured to receive a signal from a first detection region and obtain a first detection signal, and the at least one processor is configured to implement the method according to any one of claims 1 to 14.

55. A detection system, wherein the detection system comprises an image sensor, a detector, a transmitter, and at least one processor, wherein
the transmitter is configured to generate a laser transmission signal, and the detector is configured to receive an optical signal from a first detection region and obtain a first detection signal;
the image sensor is configured to obtain a second detection signal corresponding to a second detection region; and
the at least one processor is configured to implement the method according to any one of claims 15 to 26.

56. A terminal, wherein the terminal comprises the signal processing apparatus according to any one of claims 27 to 40; or
the signal processing apparatus according to any one of claims 41 to 52; or
the signal processing apparatus according to claim 53; or
the lidar according to claim 54; or
the detection system according to claim 55.

57. The terminal according to claim 56, wherein the terminal is a vehicle, an uncrewed aerial vehicle, or a robot.

58. A computer-readable storage medium, wherein the computer-readable storage medium stores instructions, and when the instructions are run on at least one processor, the method according to any one of claims 1 to 26 is implemented.
